# EUROPEAN PATENT APPLICATION

(11) **EP 4 730 856 A1**
(43) Date of publication of application: **22.04.2026**
(21) Application number: 24822637.5
(22) Date of filing: 07.06.2024
(51) Int. Cl.: H04W 24/02

(54) **DATA TRANSMISSION METHOD AND APPARATUS, SENDING NODE, AND RECEIVING NODE**

(30) Priority: 14.06.2023 CN 202310707539
(71) Applicant: Vivo Mobile Communication Co., Ltd., Dongguan, Guangdong 523863 (CN)
(72) Inventor: YUAN, Yannan, Dongguan, Guangdong 523863 (CN)
(74) Representative: Lavoix
(86) International application number: PCT/CN2024/097885
(87) International publication number: WO 2024/255686

(57) **Abstract**

This application discloses a data transmission method and apparatus, a sending node, and a receiving node, and pertains to the field of communication technologies. The data transmission method in embodiments of this application includes: sending, by a sending node, a first packet to a receiving node based on a target protocol, where the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

## Description

### CROSS-REFERENCE TO RELATED APPLICATIONS

This application claims priority to Chinese Patent Application No. 202310707539.X, filed in China on June 14, 2023, which is incorporated herein by reference in its entirety.

### TECHNICAL FIELD

This application pertains to the field of communication technologies, and specifically, relates to a data transmission method and apparatus, a sending node, and a receiving node.

### BACKGROUND

With development of mobile communication technologies, increasing data is involved between communication devices, for example, data oriented to positioning, sensing, computing, artificial intelligence (AI), and the like. Based on this, a data plane is proposed in a mobile communication network architecture (for example, a 6^{th} generation (6G) network architecture). The data plane may include a core network data plane function, a radio access network data plane function, and a user equipment (UE) data plane function, and has end-to-end connectivity. The data plane may be responsible for data control, for example, a data collection coordination configuration, a data collection configuration, and a data transmission configuration. In addition, the data plane may also be responsible for functions such as data collection, data transmission, data preprocessing, data privacy security, data analysis, data storage, and a data service.

However, there is no corresponding solution for how to transmit control information (for example, the data collection coordination configuration, the data collection configuration, and the data transmission configuration) of the data plane, data (for example, sensing data and positioning data) of the data plane, and the like in the related art.

### SUMMARY

Embodiments of this application provide a data transmission method and apparatus, a sending node, and a receiving node, to provide a transmission manner of control information of a data plane, data of a data plane, and the like, and implement transmission of the control information of the data plane, the data of the data plane, and the like.

According to a first aspect, a data transmission method is provided. The method includes:
sending, by a sending node, a first packet to a receiving node based on a target protocol, where
the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

According to a second aspect, a data transmission apparatus is provided. The apparatus includes:
a first sending module, configured to send a first packet to a receiving node based on a target protocol, where
the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

According to a third aspect, a data transmission method is provided. The method includes:
receiving, by a receiving node, a first packet from a sending node based on a target protocol, where
the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

According to a fourth aspect, a data transmission apparatus is provided. The apparatus includes:
a first receiving module, configured to receive a first packet from a sending node based on a target protocol, where
the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

According to a fifth aspect, a sending node is provided. The sending node includes a processor and a memory. The memory stores a program or instructions capable of running on the processor, and the program or the instructions are executed by the processor to implement the steps of the method according to the first aspect.

According to a sixth aspect, a sending node is provided. The sending node includes a processor and a communication interface. The communication interface is configured to send a first packet to a receiving node based on a target protocol, where the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

According to a seventh aspect, a receiving node is provided. The receiving node includes a processor and a memory. The memory stores a program or instructions capable of running on the processor, and the program or the instructions are executed by the processor to implement the steps of the method according to the third aspect.

According to an eighth aspect, a receiving node is provided. The receiving node includes a processor and a communication interface. The communication interface is configured to receive a first packet from a sending node based on a target protocol, where the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

According to a ninth aspect, a data transmission system is provided. The data transmission system includes a terminal and a network-side device. The terminal may be configured to perform the steps of the data transmission method according to the first aspect, and the network-side device may be configured to perform the steps of the data transmission method according to the third aspect.

According to a tenth aspect, a readable storage medium is provided. The readable storage medium stores a program or instructions, and the program or the instructions are executed by a processor to implement the steps of the method according to the first aspect or implement the steps of the method according to the third aspect.

According to an eleventh aspect, a chip is provided. The chip includes a processor and a communication interface, and the communication interface is coupled to the processor. The processor is configured to run a program or instructions to implement the steps of the method according to the first aspect or implement the steps of the method according to the third aspect.

According to a twelfth aspect, a computer program/program product is provided. The computer program/program product is stored in a storage medium. The computer program/program product is executed by at least one processor to implement the steps of the method according to the first aspect or implement the steps of the method according to the third aspect.

In the embodiments of this application, the sending node sends the first packet to the receiving node based on the target protocol, where the target protocol includes at least one of the following: the first protocol of the data plane; the second protocol of the data plane, the first protocol is located above the non-access stratum NAS protocol, the second protocol is located above the access network protocol layer, and the first packet includes at least one of the following: the packet generated based on the control information of the data plane; the packet generated based on the data of the data plane. In the embodiments of this application, at least one of the following is correspondingly introduced into the data plane: the first protocol; the second protocol, so that at least one of the control information of the data plane and the data of the data plane can be transmitted based on at least one of the following: the first protocol; the second protocol. In other words, the embodiments of this application provide a transmission manner of the control information of the data plane, the data of the data plane, and the like, and implement transmission of the control information of the data plane, the data of the data plane, and the like.

### BRIEF DESCRIPTION OF DRAWINGS

FIG. 1 is a block diagram of a wireless communication system to which an embodiment of this application is applicable;
FIG. 2a is a schematic diagram of a user plane protocol stack according to an embodiment of this application;
FIG. 2b is a schematic diagram of a control plane protocol stack according to an embodiment of this application;
FIG. 3a is a schematic diagram of a positioning protocol stack between UE and an LMF according to an embodiment of this application;
FIG. 3b is a schematic diagram of a positioning protocol stack between an NG RAN and an LMF according to an embodiment of this application;
FIG. 4 is a flowchart of a data transmission method according to an embodiment of this application;
FIG. 5 is a schematic diagram of a data plane protocol stack between UE and a CN according to an embodiment of this application;
FIG. 6a is a schematic diagram 1 of a data plane protocol stack between UE, a RAN, and a CN according to an embodiment of this application;
FIG. 6b is a schematic diagram 2 of a data plane protocol stack between UE, a RAN, and a CN according to an embodiment of this application;
FIG. 7 is a flowchart of another data transmission method according to an embodiment of this application;
FIG. 8 is a schematic diagram 3 of a data plane protocol stack between UE, a RAN, and a CN according to an embodiment of this application;
FIG. 9 is a schematic diagram 4 of a data plane protocol stack between UE, a RAN, and a CN according to an embodiment of this application;
FIG. 10 is a schematic diagram 5 of a data plane protocol stack between UE, a RAN, and a CN according to an embodiment of this application;
FIG. 11 is a structural diagram of a data transmission apparatus according to an embodiment of this application;
FIG. 12 is a structural diagram of another data transmission apparatus according to an embodiment of this application;
FIG. 13 is a structural diagram of a communication device according to an embodiment of this application;
FIG. 14 is a structural diagram of a sending node according to an embodiment of this application; and
FIG. 15 is a structural diagram of a receiving node according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed or the requested result.

It should be noted that a technology described in the embodiments of this application is not limited to a long term evolution (LTE)/LTE-advanced (LTE-A) system, and may be further applied to other wireless communication systems, such as a code division multiple access (CDMA) system, a time division multiple access (TDMA) system, a frequency division multiple access (FDMA) system, an orthogonal frequency division multiple access (OFDMA) system, a single-carrier frequency-division multiple access (SC-FDMA) system, or another system. The terms "system" and "network" are often used interchangeably in the embodiments of this application. The technology described may be used for the systems and radio technologies described above, as well as other systems and radio technologies. The following describes a new radio (NR) system for illustrative purposes, and NR terms are used in most of the following descriptions. However, these technologies are also applicable to systems such as a 6^{th} generation (6G) communication system other than the NR system.

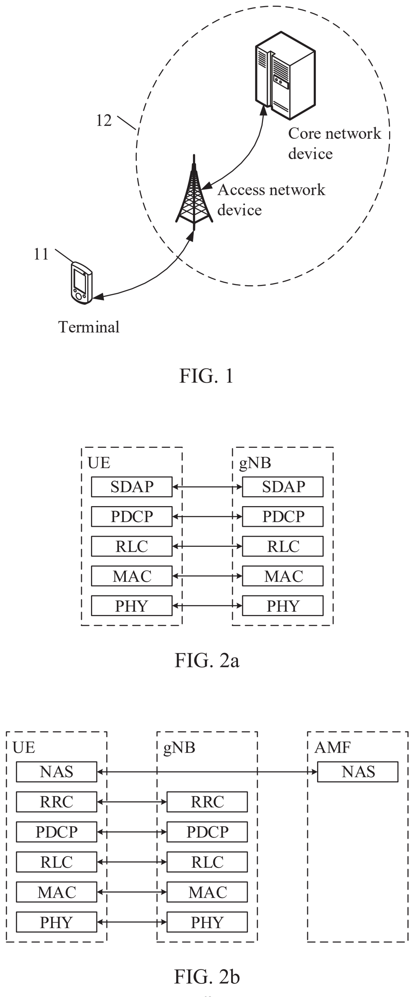

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (PDA), a palmtop computer, a netbook, an ultra-mobile personal computer (UMPC), a mobile internet device (MID), an augmented reality (AR) device, a virtual reality (VR) device, a robot, a wearable device (Wearable Device), a flight vehicle (flight vehicle), vehicle user equipment (VUE), ship-mounted equipment, pedestrian user equipment (PUE), a smart home (a home device with a wireless communication function, for example, a refrigerator, a television, a laundry machine, or a furniture), a gaming console, a personal computer (PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (RAN) device, a radio access network function, or a radio access network unit. The access network device may include a base station, a wireless local area network (WLAN) access point (AP), a wireless fidelity (Wi-Fi) node, and the like. The base station may be referred to as a NodeB (NB), an evolved NodeB (eNB), the next generation NodeB (gNB), a new radio NodeB (NR NodeB), an access point, a relay base station (RBS), a serving base station (SBS), a base transceiver station (BTS), a radio base station, a radio transceiver, a basic service set (BSS), an extended service set (ESS), a home NodeB (HNB), a home evolved NodeB (home evolved NodeB), a transmission reception point (TRP), or another proper term in the field. The base station is not limited to a specific technical term, provided that the same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (MME), an access and mobility management function (AMF), a session management function (SMF), a user plane function (UPF), a policy control function (PCF), a policy and charging rules function (PCRF) unit, an edge application server discovery function (EASDF), unified data management (UDM), a unified data repository (UDR), a home subscriber server (HSS), a centralized network configuration (CNC), a network repository function (NRF), a network exposure function (NEF), a local NEF (Local NEF or L-NEF), a binding support function (BSF), an application function (AF), and the like. It should be noted that in the embodiments of this application, only a core network device in the NR system is used as an example for description, and a specific type of the core network device is not limited.

For ease of understanding, the following describes some content related to the embodiments of this application.

### I. 5th generation (5G) control plane and user plane protocol solution

According to definitions of control plane (control plane) and user plane (user plane) protocol architectures, user plane protocols include a service data adaptation protocol (SDAP), a packet data convergence protocol (PDCP), radio link control (RLC), media access control (MAC), and a physical layer (PHY), as shown in FIG. 2a, and control plane protocols include radio resource control (RRC), a PDCP, RLC, MAC, and a PHY, as shown in FIG. 2b.

### II. Positioning protocol stack

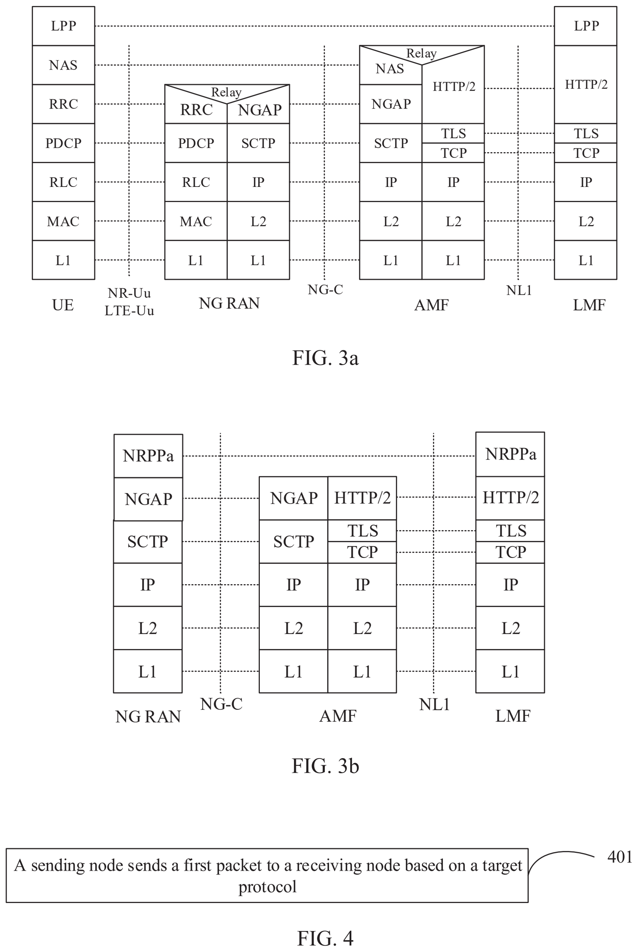

For example, a positioning protocol stack between UE and a location management function (LMF) may be shown in FIG. 3a, and a positioning protocol stack between a next generation radio access network (NG-RAN) and an LMF may be shown in FIG. 3b.

### III. Data plane control function

The data plane control function is responsible for one or more of data collection coordination (Data Collection Coordination), a data transmission configuration, a data reporting configuration, and a data processing configuration. The data collection coordination means that the data plane control function determines, based on a received data request and/or received data subscription information, whether required data is available, determines a data providing function that can provide the required data, and sends a data collection configuration.

The data reporting configuration means configuring packet encapsulation of data provided by the data providing function, including a packet length size, a packet length distribution feature, a packet time interval, a distribution feature of a packet sending time interval, whether the data providing function encrypts data, and whether the data providing function scrambles data. If encryption or scrambling is required, a key, a scrambling sequence, and the like need to be configured.

The data transmission configuration means establishing, modifying, and releasing a data transmission channel and managing quality of service (QoS).

The data processing configuration means performing a data processing configuration for a data processing node, including data preprocessing (for example, filtering and desensitization), data analysis, and the like. The data processing node may include at least one of the following: a data transmission node; a data receiving node; a second node, where the second node is UE or a network function node other than the data transmission node and the data receiving node. When the data processing node is the data transmission node that transmits data, this data transmission and processing manner is also referred to as in-network computing.

It should be noted that a core network data plane function, a radio access network data plane function, or a UE data plane function in the embodiments of this application may be a function in a core network, a radio access network, or UE, may be one node, or may be a plurality of nodes related to a data plane. Examples of one or more nodes associated with the data plane are a data control function node, a data security and trust function node, a data repository function node, a data consumption function node, a data transmission function node, a data providing function node, and a data processing function node. The data control function node is the data control function, for example. The data security and trust function node is configured to support security mechanisms such as authentication, authorization, and access control, and to evaluate data trustworthiness of the data providing function and support trustworthiness query. The data repository node is configured to support persistent storage and retrieval of data collected on the data plane. The data consumption function node is configured to support data request sending and data response receiving. The data transmission function node is configured to support transmission of data of the data plane. The data providing function node is configured to provide required data. The data processing node is configured to process the data of the data plane, including data analysis, de-redundancy, filtering, desensitization, and the like.

With reference to the accompanying drawings, the following describes in detail the data transmission method provided in the embodiments of this application by using some embodiments and application scenarios thereof.

Referring to FIG. 4, FIG. 4 is a flowchart of a data transmission method according to an embodiment of this application. The method may be performed by a terminal. As shown in FIG. 4, the method includes the following steps.

Step 401: A sending node sends a first packet to a receiving node based on a target protocol.

The target protocol includes at least one of the following: a first protocol of a data plane; a second protocol of the data plane, the first protocol is located above a non-access stratum (NAS) protocol, the second protocol is located above an access network protocol layer, and the first packet includes at least one of the following: a packet generated based on control information of the data plane; a packet generated based on data of the data plane.

For example, the sending node may be one of the terminal and a core network device. The receiving node may be the other of the terminal and the core network device. The core network device may include a core network node, a core network function, or the like, and the core network function may include any core network function, for example, a core network data function (for example, a data control function (DCF)), that supports the target protocol.

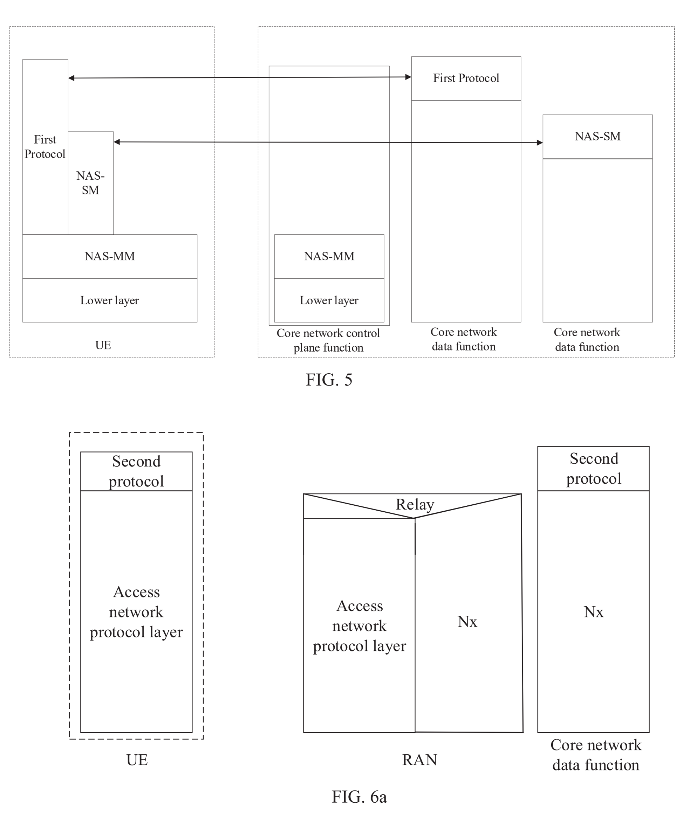

The first protocol is located above the NAS protocol, and the NAS protocol is a protocol used for a wireless interface between the terminal and the core network device. For example, as shown in FIG. 5, in an NR protocol, the NAS protocol may be a NAS protocol used for a mobility management (MM) function (namely, a NAS-MM), the first protocol may be, for example, a NAS data control (NAS-DC) protocol, and the first protocol is located above the NAS-MM.

The first protocol may perform first processing on data of the first protocol based on a configuration, where the first processing may include at least one of the following: parsing (parse) data; forwarding data to a target node. For example, the forwarding data to a target node may include a case that the first protocol does not parse the data of the first protocol, but directly forwards the data of the first protocol to the target node based on configuration information, or the first protocol parses only a part of the data of the first protocol, for example, a header of the data of the first protocol, and forwards the data of the first protocol to the target node based on a parsing result.

The target node may include but is not limited to at least one of the following:
a core network function such as a core network data plane function, an LMF, or a network data analytics function (NWDAF);
a radio access network function such as a centralized unit-control plane (CU-CP), a centralized unit-user plane (CU-UP), a centralized unit-data plane (CU-DP), a radio access network data plane function, an SON function, or an MDT function;
a function external to a network, such as an AF.

It should be noted that the first protocol may be used to perform first processing on at least one of the control information of the data plane and the data of the data plane, in other words, the data of the first protocol may include at least one of the control information of the data plane and the data of the data plane. The control information of the data plane may also be referred to as signaling data of the data plane, for example, information related to data plane control such as a data collection coordination configuration, a data collection configuration, and a data transmission configuration. The data of the data plane may include but is not limited to at least one of the following: data collected based on data plane control; positioning data, sensing data, computing data, AI data (for example, AI model training data or an AI model), measurement data, user subscription data, and context data that are carried on the data plane as a transport protocol layer.

The second protocol is located above the access network protocol layer. For example, the second protocol is located above a 6G-AN protocol layer. The access network protocol layer may refer to a set of protocols or layers that depend on an access network (a set of protocols/layers depends on the AN). In a 5G protocol, when the access network protocol layer (5G-AN protocol layers) is a 3GPP NG-RAN, this set of protocols/layers is a set of user plane protocol stacks between UE and the NG-RAN defined by TS 38.401 and TS 38.300. For example, in the NR protocol, the access network protocol layer may include a PHY, MAC, RLC, a PDCP, and an SDAP. Correspondingly, that the second protocol is located above the access network protocol layer may mean that the second protocol is located above a set of protocol layers including the PHY, MAC, RLC, the PDCP, and the SDAP, for example, as shown in FIG. 6a.

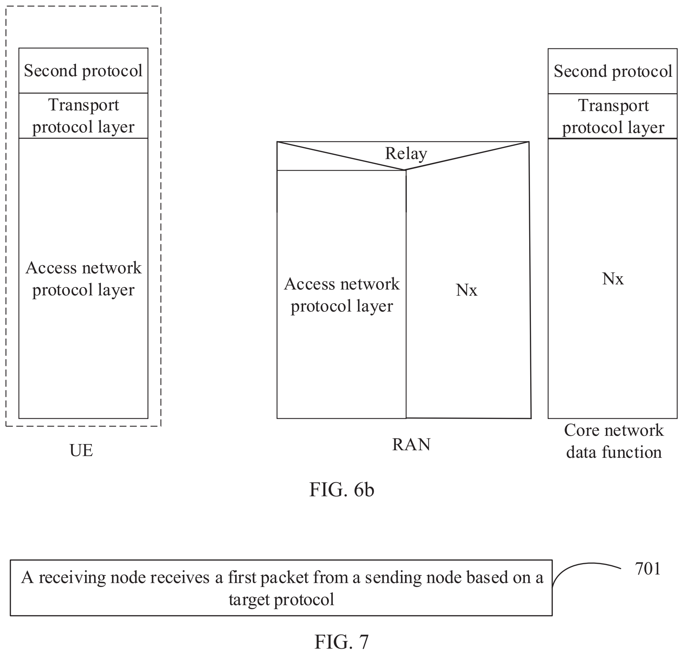

In some optional embodiments, if a plurality of data functions (for example, a data transmission function (Data Transmission Function)) need to be routed based on a transport protocol such as an Internet protocol (IP), a transport protocol layer such as an IP layer, a transmission control protocol (TCP)/IP, or a user datagram protocol (UDP)/IP may be added above the access network protocol layer. Correspondingly, the second protocol may be located above the transport protocol, for example, as shown in FIG. 6b.

It should be noted that a lower layer (Lower Layer) in FIG. 5 may be understood as a protocol layer lower than the NAS-MM layer, and a core network control plane function in FIG. 5 may be, for example, an AMF. The core network data function in FIG. 5, FIG. 6a, and FIG. 6b may be, for example, the data control function. Nx in FIG. 6a and FIG. 6b represents an interface between an access network node and the core network data function. It may be understood that the interface between the access network node and the core network data function may alternatively be represented by another name.

The second protocol may perform first processing on data of the second protocol based on a configuration, where the first processing may include at least one of the following: parsing (parse) data; forwarding data to a target node. For example, the forwarding data to a target node may include a case that the second protocol does not parse the data of the second protocol, but directly forwards the data of the second protocol to the target node based on configuration information, or the second protocol parses only a part of the data of the second protocol, for example, a header of the data of the second protocol, and forwards the data of the second protocol to the target node based on a parsing result.

The target node may include but is not limited to at least one of the following:
a core network function such as a core network data plane function, an LMF, or an NWDAF;
a radio access network function such as a CU-CP, a CU-UP, a CU-DP, a radio access network data plane function, an SON function, or an MDT function;
a function external to a network, such as an AF.

It should be noted that the second protocol may be used to perform first processing on at least one of the control information of the data plane and the data of the data plane, in other words, the data of the second protocol may include at least one of the control information of the data plane and the data of the data plane. The control information of the data plane may also be referred to as the signaling data of the data plane, for example, the information related to data plane control such as the data collection coordination configuration, the data collection configuration, and the data transmission configuration. The data of the data plane may include but is not limited to at least one of the following: the data collected based on data plane control; the positioning data, the sensing data, computing data, the AI data (for example, the AI model training data or the AI model), the measurement data, the user subscription data, and the context data that are carried on the data plane as the transport protocol layer.

The following describes step 401 in different cases by using examples.
Case 1: The sending node sends the first packet to the receiving node based on the first protocol, where the first packet is the packet generated based on the control information of the data plane.
Case 2: The sending node sends the first packet to the receiving node based on the second protocol, where the first packet is the packet generated based on the data of the data plane.
Case 3: The sending node sends the first packet to the receiving node based on the first protocol, where the first packet is the packet generated based on the data of the data plane.
Case 4: The sending node sends the first packet to the receiving node based on the second protocol, where the first packet is the packet generated based on the control information of the data plane.
Case 5: The sending node sends, to the receiving node based on the first protocol, the packet generated based on the control information of the data plane, and the sending node sends, to the receiving node based on the second protocol, the packet generated based on the data of the data plane, where the first packet includes the packet generated based on the control information of the data plane and the packet generated based on the data of the data plane.
Case 6: The sending node sends, to the receiving node based on the first protocol, the packet generated based on the control information of the data plane, and the sending node sends, to the receiving node based on the first protocol, the packet generated based on the data of the data plane, where the first packet includes the packet generated based on the control information of the data plane and the packet generated based on the data of the data plane.

In the data transmission method provided in this embodiment of this application, the sending node sends the first packet to the receiving node based on the target protocol, where the target protocol includes at least one of the following: the first protocol of the data plane; the second protocol of the data plane, the first protocol is located above the non-access stratum NAS protocol, the second protocol is located above the access network protocol layer, and the first packet includes at least one of the following: the packet generated based on the control information of the data plane; the packet generated based on the data of the data plane. In this embodiment of this application, at least one of the following is correspondingly introduced into the data plane: the first protocol; the second protocol, so that at least one of the control information of the data plane and the data of the data plane can be transmitted based on at least one of the following: the first protocol; the second protocol. In other words, this embodiment of this application provides a transmission manner of the control information of the data plane, the data of the data plane, and the like, and implement transmission of the control information of the data plane, the data of the data plane, and the like.

Optionally, the first packet further includes first information, the first information includes first indication information, and the first indication information is used to indicate one of the following:
the first packet is terminated at a target function of the receiving node;
the first packet is forwarded by the target function of the receiving node; and
the first packet is processed and then forwarded by the target function of the receiving node, where
the target function is a function that is of the receiving node and that supports the target protocol.

For example, in a case that the target protocol includes the first protocol, the target function includes a first function, and the first function supports the first protocol. For example, in a case that the receiving node is the core network device, the first function may be the data control function that supports the first protocol. In a case that the target protocol includes the second protocol, the target function includes a second function, and the second function supports the second protocol. For example, in a case that the receiving node is the core network device, the second function may be the data transmission function that supports the second protocol.

That the first packet is terminated at the target function of the receiving node may mean that the target function of the receiving node no longer transfers the first packet to another node after receiving the packet. That the first packet is forwarded by the target function of the receiving node may mean that after receiving the first packet, the target function of the receiving node does not process the packet, but directly forwards the first packet. That the first packet is processed and then forwarded by the target function of the receiving node may mean that after receiving the first packet, the target function of the receiving node processes the first packet and forwards a processed packet.

A target node to which the target function of the receiving node forwards the first packet or the processed packet may be determined based on at least one of the following: pre-obtained forwarding configuration information (for example, forwarding node information or forwarding routing information); a header of the first packet. For example, in a case that the first packet is the packet generated based on the control information of the data plane, the target node may be determined based on the header of the first packet. In a case that the first packet is the packet generated based on the data of the data plane, the packet generated based on the control information of the data plane may be received in advance. The packet may include the forwarding configuration information. Further, the target node of the first packet may be determined based on the forwarding configuration information.

For example, the first information may be carried in the header of the first packet, the first information includes the first indication information, and the first indication information indicates a processing behavior of the target function of the receiving node toward the first packet. For example, a header of a service data unit (SDU) in a protocol data unit (PDU) generated by the target function includes the first indication information.

It may be understood that in a case of receiving the first packet, the target function of the receiving node may determine, based on the first indication information, to terminate transmission of the first packet, or forward the first packet to the target node, or process the first packet and forward a processed first packet to the target node.

In this embodiment, the first packet carries the first indication information to indicate the processing behavior of the target function of the receiving node toward the first packet, which helps the target function of the receiving node determine the processing behavior toward the first packet, thereby ensuring accuracy of processing the first packet by the target function of the receiving node.

Optionally, the first information further includes at least one of the following:
forwarding node information corresponding to the first packet;
forwarding routing information corresponding to the first packet.

In this embodiment, the forwarding node information corresponding to the first packet may mean that the forwarding node information is used for forwarding the first packet. For example, the forwarding node information may include but is not limited to an identifier, for example, a network function identifier (for example, an LMF instance ID or a RAN node ID), of a forwarding node. The forwarding node may be understood as a transmission node involved in a forwarding process of the first packet.

The forwarding routing information corresponding to the first packet may mean that the forwarding routing information is used for forwarding the first packet. For example, the forwarding routing information may include information, for example, an AMF instance ID, about a next routing node of each transmission node.

In this embodiment, the first information further includes at least one of the following: the forwarding node information corresponding to the first packet; the forwarding routing information corresponding to the first packet, which facilitates relatively accurate control on forwarding of the first packet.

Optionally, in a case that the first packet is the packet generated based on the control information of the data plane, the first packet further includes second information, the second information includes second indication information, and the second indication information is used to indicate one of the following:
a second packet is terminated at the target function of the receiving node;
the second packet is forwarded by the target function of the receiving node; and
the second packet is processed and then forwarded by the target function of the receiving node, where
the second packet is a packet generated based on the data of the data plane, and the target function is a function that is of the receiving node and that supports the target protocol.

In this embodiment, the second packet may be a packet whose transmission is controlled by the first packet, in other words, the control information (that is, the first packet) of the data plane is used to control transmission of the data (that is, the second packet) of the data plane.

It should be noted that the second indication information in this embodiment is similar to the first indication information, and details are not described herein again.

In this embodiment, the first packet carries the second indication information to indicate a processing behavior of the target function of the receiving node toward the second packet, which helps the target function of the receiving node determine the processing behavior toward the second packet, thereby ensuring accuracy of processing the second packet by the target function of the receiving node.

Optionally, the second information further includes at least one of the following:
forwarding node information corresponding to the second packet;
forwarding routing information corresponding to the second packet.

For the forwarding node information corresponding to the second packet and the forwarding routing information corresponding to the second packet in this embodiment, refer to the related descriptions of the forwarding node information corresponding to the first packet and the forwarding routing information corresponding to the first packet. Details are not described herein again.

In this embodiment, the second information further includes at least one of the following: the forwarding node information corresponding to the second packet; the forwarding routing information corresponding to the second packet, which facilitates relatively accurate control on forwarding of the second packet.

Optionally, the target protocol includes the first protocol, and that a sending node sends a first packet to a receiving node based on a target protocol includes:
generating, by the sending node, a first protocol data unit PDU of the data plane based on the first protocol; and
sending, by the sending node, the first PDU to the receiving node based on the NAS protocol.

In this embodiment, the sending node generates the first PDU from an SDU of the first protocol based on the first protocol, and delivers the first PDU to the NAS protocol of the sending node, so that the sending node can send the first PDU to the receiving node based on the NAS protocol. Optionally, the first PDU may be transmitted by using a data plane container (DP-Container) of the NAS protocol, where the DP-Container may be used to transmit, between the core network device and the terminal, a packet that is based on the first protocol, and the NAS protocol is transparent to the DP-Container, in other words, the NAS protocol can transparently transmit the DP-Container. For example, for the NR protocol, the first PDU may be transmitted by using a DP-Container of the NAS-MM, and the NAS-MM is transparent to the DP-Container.

Correspondingly, the receiving node may receive the first PDU based on the NAS protocol, and deliver the received first PDU to the first function of the receiving node, namely, a function that is of the receiving node and that supports the first protocol.

Optionally, a header of the first PDU includes third indication information, the third indication information is used to indicate to deliver a service data unit SDU of the first PDU to the first function of the receiving node, and the first function supports the first protocol.

Optionally, the target protocol includes the second protocol, and that a sending node sends a first packet to a receiving node based on a target protocol includes:
generating, by the sending node, a second PDU of the data plane based on the second protocol; and
sending, by the sending node, the second PDU to the receiving node based on the access network protocol layer.

In this embodiment, the sending node may generate the second PDU from an SDU of the second protocol based on the second protocol, and deliver the second PDU to the access network protocol layer of the sending node, so that the sending node can send the second PDU based on the access network protocol layer.

Correspondingly, the receiving node may receive the second PDU based on the access network protocol layer, and deliver the received second PDU to the second function of the receiving node, namely, a function that is of the receiving node and that supports the second protocol.

Optionally, a header of the second PDU includes fourth indication information, the fourth indication information is used to indicate to deliver an SDU of the second PDU to the second function of the receiving node, and the second function supports the second protocol.

Optionally, the target protocol includes the first protocol, and that a sending node sends a first packet to a receiving node based on a target protocol includes:
sending, by the sending node, a first NAS message to the receiving node based on the first protocol, where the first NAS message includes the first packet.

In this embodiment, the first protocol may transmit the first packet by using a NAS solution. For example, at least one of the data and the control information of the data plane may be transmitted by reusing an existing NAS message type. For example, at least one of the data and the control information of the data plane is transmitted by using a mobility management message (Mobility Management Message) or a session management message (Session Management Message). Alternatively, a new NAS message type such as a data plane management message may be introduced to transmit at least one of the data and the control information of the data plane.

In this embodiment, the first protocol transmits the first packet by using a NAS message, which is relatively easy to implement.

Optionally, the first NAS message includes fifth indication information, and the fifth indication information is used to indicate that the first NAS message is a data plane message.

In this embodiment, the first NAS message carries the fifth indication information to indicate that the first NAS message is a data plane message. In this way, in a case of receiving the first NAS message, the receiving node can relatively conveniently learn that the first NAS message is a data plane message.

Optionally, a message type of the first NAS message is a mobility management message or a session management message.

In this embodiment, at least one of the control information of the data plane and the data of the data plane is transmitted by reusing the existing NAS message type (namely, the mobility management message or the session management message).

Taking a service request procedure (Service request procedures) as an example, a process of sending at least one of the data and the control information of the data plane by reusing the existing NAS message type may include the following steps.

Step a1: When UE needs to send control information of an uplink data plane or data of the data plane, the UE sends a service request message to an access network device, where the service request message includes an access network (AN) parameter and a service request. The service request includes a data plane message indication, a UE identifier, and a NAS message container (NAS message container). The data plane message indication is used to indicate that the message is a data plane message, and an AMF forwards, based on the data plane message, information in the NAS message container to a first function of the data plane for processing.

If the UE triggers the service request procedure because the UE needs to send the data of the data plane, the service request may further include a list of data plane bearers to be activated, for example, a list of data plane sessions to be activated (list of DP session to be activated).

Step a2: The access network device encapsulates the service request message in step a1 into an N2 message, and sends the N2 message to the AMF, where the N2 message includes an N2 parameter and the service request in step a1.

Step a3: The AMF forwards, based on the data plane message indication in the service request message, the NAS message container to a DCF for processing.

Step a4: The DCF determines, based on received message content, whether to accept the data plane service request of the UE, and sends data plane response information to the AMF.

Step a5: The AMF sends a response message to the access network device, where the response message includes at least the data plane response information received from the DCF.

Step a6: The access network device sends the data plane response information to the UE by using a radio resource control (RRC) reconfiguration (Reconfiguration) message.

In this embodiment, transmitting at least one of the data and the control information of the data plane by reusing the mobility management message or the session management message can simplify signaling design while ensuring transmission of at least one of the data and the control information of the data plane.

Optionally, a message type of the first NAS message is a data plane management message.

In this embodiment, a new NAS message type (namely, the data plane management message) is introduced to transmit at least one of the data and the control information of the data plane. It may be understood that the data plane management message may also be referred to as another name.

For example, currently, 2 bits (that is, bits 8 and 7) in most significant bits in an 8-bit (numbered bits 1~8) message type (message type) of a NAS message are used to indicate that the message is a mobility management message (Mobility Management Message) or a session management message (Session Management Message). For example, when the 2 bits in the most significant bits are 01, it indicates that the message is a mobility management message, and when the 2 bits in the most significant bits are 11, it indicates that the message is a session management message. Different values of bits 6~1 are used to distinguish between a registration request message, a registration accept message, a service request message, a service accept message, and the like. Therefore, an optional implementation of this embodiment is to newly add the data plane management message (Data Plane Management Message) to the 2 bits in the most significant bits. For example, a value of the 2 bits in the most significant bits other than 10 and 11 may be used to indicate the data plane management message. For example, when the 2 bits in the most significant bits are 10 or 00, it indicates that the message is a data plane management message. Similarly, different values of the bits 6~1 may be further used to distinguish between different data plane management messages, for example, a message used for a data transmission configuration, a data reporting configuration, or a data processing configuration, or a message used to request to establish, modify, or release a data plane bearer.

In this embodiment, a new type of NAS message (namely, the data plane management message) is introduced to transmit at least one of the data and the control information of the data plane. In this way, it can be relatively conveniently learned based on the message type that the first NAS message is a data plane message.

Optionally, the first NAS message is used to request to establish, modify, or release a data plane bearer, and the data plane bearer is a bearer corresponding to the second protocol.

In this embodiment, the data plane bearer corresponding to the second protocol is established, modified, or released by using the first NAS message sent based on the first protocol. In this way, it can be relatively easy to manage the data plane bearer corresponding to the second protocol.

In some optional embodiments, the first NAS message may further include third information, and the third information may include at least one of the following: a type of a data plane bearer; an identifier of a function node for performing data transmission between the core network device and the UE; a data bearer identifier; a data transmission priority; quality of service (QoS) information.

The type of the data plane bearer may be one of a control bearer, a data bearer, and a control and data bearer, or the type of the data plane bearer may be one of a bearer terminated at the second function (namely, a function that supports the second protocol) of the receiving node, a bearer forwarded by the second function of the receiving node, and a bearer processed and forwarded by the second function of the receiving node, or the type of the data plane bearer may include one of a control bearer, a data bearer, and a control and data bearer, a bearer terminated at the second function of the receiving node, a bearer forwarded by the second function of the receiving node, and a bearer processed and forwarded by the second function of the receiving node.

Correspondingly, in a case of receiving the first NAS message, the receiving node may send a data plane bearer establishment response to the sending node, where the data plane bearer establishment response includes an accept or reject indication. Optionally, the data plane bearer establishment response may further include at least one of the following: a data bearer identifier; a QoS flow identifier; a bearer type; security information (for example, whether encryption is enabled or whether integrity protection is enabled).

Optionally, the fifth indication information in the first NAS message is used to indicate to request to establish, modify, or release a data plane PDU session; or
the message type of the first NAS message is a data plane PDU session, where
the data plane bearer is the data plane PDU session.

For example, in a case that the first NAS message is a mobility management message or a session management message, the fifth indication information carried in the first NAS message is used to indicate to request to establish, modify, or release the data plane PDU session. In a case that the first NAS message is the introduced new NAS message type (namely, the data plane management message), the message type of the first NAS message may be the data plane PDU session.

In some optional embodiments, the data plane bearer may be defined as a PDU session, and a PDU session establishment (Establishment)/modification (Modification)/release (Release) procedure is used to establish, modify, and release the data plane bearer. For example, a data plane bearer establishment process based on the PDU session establishment (Establishment)/modification (Modification)/release (Release) procedure may include the following steps.

Step b1: UE sends a NAS message to an AMF, where in addition to a single network slice selection assistance information (S-NSSAI), a UE requested data network name (UE Requested DNN), a PDU session identifier (PDU Session ID), a request type (Request type), an old PDU session identifier (Old PDU Session ID), an N1 session management container (SM container) (a PDU session establishment request (PDU Session Establishment Request) and a port management information container (Port Management Information Container)), the NAS message may include data plane bearer indication information (namely, fifth indication information), to indicate that a PDU session whose establishment is requested is used for data plane transmission; or content of a request type (request type) field is extended to include a data plane PDU session (data plane PDU session), to indicate that a PDU session used for data plane transmission is to be established/modified/released.

Step b2: The AMF selects a suitable SMF (for example, an SMF that supports data plane transmission QoS management) based on the data plane bearer indication information. The AMF forwards an N1 SM container message to the determined SMF.

Step b3: The SMF establishes/modifies/releases a PDU session based on the received message, and sends a response message to the AMF, for example, sends a PDU session establishment accept (PDU session establishment accept) message to the AMF.

Step b4: The AMF sends an N2 PDU session request (N2 PDU Session Request), including N2 session management information (N2 SM information), a NAS message (message), and the like, where the NAS message includes a PDU session ID, an N1 SM container (a PDU session establishment request), CN assisted RAN parameter tuning (CN assisted RAN parameters tuning), and the like.

Step b5: An access network device determines, based on a received SMF message, whether signaling needs to be sent to the UE, where if a data radio bearer (DRB) meets a requirement, signaling does not need to be sent; or if a data radio bearer needs to be added or modified, corresponding RRC signaling is sent to the UE.

Optionally, the first packet is the packet generated based on the control information of the data plane, and the first NAS message further includes at least one data plane bearer to be activated; and the data plane bearer is a bearer corresponding to the second protocol.

For example, the first packet may include a list of data plane bearers to be activated, for example, a list of data plane sessions to be activated (list of DP session to be activated).

Optionally, the first protocol is used by default to transmit the control information of the data plane.

In this embodiment, the first protocol is used by default to transmit the control information of the data plane. In this way, it may be unnecessary to indicate a type of the first protocol, or it may only be indicated that the type of the first protocol is one of a bearer terminated at the first function of the receiving node, a bearer forwarded by the first function of the receiving node, and a bearer processed and forwarded by the first function of the receiving node, where the first function of the receiving node is a function that supports the first protocol, in other words, a processing behavior of the first function of the receiving node toward data transmitted based on the first protocol is indicated.

Optionally, the target protocol includes the second protocol, and that a sending node sends a first packet to a receiving node based on a target protocol includes:
sending, by the sending node, the first packet to the receiving node on a first bearer based on the second protocol, where the first bearer is a data plane bearer.

In this embodiment, a packet of the second protocol is transmitted on the data plane bearer. The first bearer may be any data plane bearer.

Optionally, a type of the data plane bearer includes at least one of the following: a first type; a second type;
the first type includes one of the following: a control bearer, a data bearer, and a control and data bearer; and
the second type includes one of the following: a bearer terminated at the second function of the receiving node, a bearer forwarded by the second function of the receiving node, and a bearer processed and then forwarded by the second function of the receiving node, where
the second function supports the second protocol.

In an implementation, the data plane bearer may be classified based on a type of data carried by the data plane bearer, to be specific, classified into the control bearer, the data bearer, and the control and data bearer. In this case, the type of the data plane bearer is the first type, and the first type is one of the control bearer, the data bearer, and the control and data bearer.

The control bearer is used to transmit the control information of the data plane, including the data collection coordination configuration, the data transmission configuration, the data reporting configuration, the data processing configuration, and the like.

The data bearer is used to transmit the data of the data plane, including data that needs to be collected (for example, SON data, MDT data, quality of experience (QoE) data, and L2 measurement data), sensing data, AI training data, AI model data, computing data, and the like.

The control and data bearer is used to transmit both the control information of the data plane and the data of the data plane.

In another implementation, the data plane bearer may be classified based on a processing behavior of the second function of the receiving node toward the data plane bearer, to be specific, classified into the bearer terminated at the second function of the receiving node, the bearer forwarded by the second function of the receiving node, and the bearer processed and forwarded by the second function of the receiving node. In this case, the type of the data plane bearer is the second type, and the second type is one of the bearer terminated at the second function of the receiving node, the bearer forwarded by the second function of the receiving node, and the bearer processed and forwarded by the second function of the receiving node.

For the bearer terminated at the second function of the receiving node, the second function of the receiving node terminates data transmission on the bearer. For example, the bearer terminated at the second function of the receiving node may be used to transmit the control information of the data plane, including the data collection coordination configuration, the data transmission configuration, the data reporting configuration, the data processing configuration, and the like.

For the bearer forwarded by the second function of the receiving node, the second function of the receiving node receives data on the bearer and then forwards the data, and the forwarded data is transparent (transparent) to the second function of the receiving node. For example, the bearer forwarded by the second function of the receiving node may be used to transmit the data of the data plane, including data that needs to be collected (for example, SON data, MDT data, QoE data, and L2 measurement data), sensing data, AI training data, AI model data, computing data, and the like.

For the bearer processed and forwarded by the second function of the receiving node, the second function of the receiving node processes (for example, performs desensitization, de-redundancy, filtering, and analysis on) some or all of data on the bearer, and then forwards processed data

In still another implementation, the data plane bearer may be classified by using the foregoing two classification manners. To be specific, the data plane bearer is classified based on both the type of the data carried by the bearer and the processing behavior of the second function of the receiving node toward the data plane bearer. In this case, the type of the data plane bearer includes the first type and the second type, the first type is one of the control bearer, the data bearer, and the control and data bearer, and the second type is one of the bearer terminated at the second function of the receiving node, the bearer forwarded by the second function of the receiving node, and the bearer processed and forwarded by the second function of the receiving node.

Optionally, a type of the data plane bearer is a data bearer by default.

In this embodiment, the type of the data plane bearer is the data bearer by default, in other words, the data plane bearer is used by default to transmit the data of the data plane.

Optionally, the method further includes:
sending, by the sending node, a first message on a second bearer based on the second protocol, where
the first message is used to request to establish the first bearer, and the second bearer is an established data plane bearer.

In this embodiment, a new data plane bearer (namely, the first bearer) may be established based on the established data plane bearer (namely, the second bearer). In this way, flexibility of establishing the data plane bearer can be improved.

Optionally, the first packet is the packet generated based on the data of the data plane; and
that a sending node sends a first packet to a receiving node based on a target protocol includes at least one of the following:
in a case of determining not to transmit data by using a data plane bearer, sending, by the sending node, the first packet to the receiving node based on the first protocol;
in a case of determining to transmit data by using a data plane bearer, sending, by the sending node, the first packet to the receiving node on the data plane bearer based on the second protocol.

For example, in a case that the sending node is the terminal and the receiving node is the core network device, the sending node may determine, based on configuration information delivered by the receiving node, whether to transmit data by using a data plane bearer. The configuration information may be configuration information for the first packet, configuration information for all packets of a target service, or the like. For example, in a case that the configuration information delivered by the receiving node does not include an identifier of the data plane bearer, the sending node determines not to transmit data by using a data plane bearer. In this case, the sending node may send the first packet to the receiving node based on the first protocol. In a case that the configuration information delivered by the receiving node includes the identifier of the data plane bearer, the sending node determines to transmit data by using a data plane bearer. In this case, the sending node may send the first packet to the receiving node on the data plane bearer based on the second protocol.

In this embodiment, in the case of determining not to transmit data by using a data plane bearer, the sending node sends the first packet to the receiving node based on the first protocol; and in the case of determining to transmit data by using a data plane bearer, the sending node sends the first packet to the receiving node on the data plane bearer based on the second protocol, so that transmission of the first packet can be implemented in different cases.

Optionally, the first packet is the packet generated based on the data of the data plane;
before the sending node sends the first packet to the receiving node based on the target protocol, the method further includes:
receiving, by the sending node, first configuration information based on the first protocol, where the first configuration information includes an identifier of a data plane bearer; and
that a sending node sends a first packet to a receiving node based on a target protocol includes:
   sending, by the sending node, the first packet to the receiving node on the data plane bearer based on the second protocol.

In this embodiment, before sending the first packet, the sending node receives the first configuration information based on the first protocol, where the first configuration information includes at least the identifier of the data plane bearer, and further, may send the first packet based on at least one data plane bearer indicated by the identifier of the data plane bearer.

It may be understood that in a case that a plurality of data plane bearers have been established between the sending node and the receiving node, the identifier of the data plane bearer may be used to indicate at least one data plane bearer in the plurality of data plane bearers, and further, the sending node may send, based on the second protocol, the first packet to the receiving node on the at least one data plane bearer indicated by the identifier of the data plane bearer.

Optionally, the data of the data plane includes at least one of the following: positioning data; sensing data; computing data; artificial intelligence AI data; measurement data; user subscription data; context data.

In this embodiment, the measurement data may include but is not limited to at least one of the following: layer-1 measurement (L1 measurement) data; layer-2 measurement (L2 measurement) data (for example, a packet delay (packet delay)); layer-3 measurement (L3 measurement) data (for example, MDT/QoE).

The context (context) data may include but is not limited to at least one of the following: a radio access network-side UE context; an AMF-side UE context; an N4 session (session) context.

The sensing data may include sensing control information and a sensing measurement quantity. In an optional classification manner, sensing measurement quantities are classified into the following four types (this embodiment focuses on describing the measurement quantity, and the sensing measurement quantities may alternatively be classified into three types or not classified, and the four types are merely used for illustration). Based on a relationship between a sensing measurement quantity and a sensing service, the following third-level measurement quantity and the following fourth-level measurement quantity may also be referred to as sensing results, and the following second-level measurement quantity and/or the following first-level measurement quantity may also be referred to as sensing measurement data.

The first-level measurement quantity is a received signal/original channel information, and includes a received signal/channel response complex result, an amplitude/phase, an I-channel/Q-channel and operation results thereof (operations include addition, subtraction, multiplication, and division, matrix addition, subtraction, and multiplication, matrix transposition, a trigonometric operation, a square root operation, a power operation, and the like, along with a threshold detection result, a maximum/minimum value extraction result, and the like of results of the foregoing operations; and the operations further include fast Fourier transform (FFT)/inverse fast Fourier transform (IFFT), discrete Fourier transform (DFT)/inverse discrete Fourier transform (IDFT), 2D-FFT, 3D-FFT, matched filtering, an autocorrelation operation, wavelet transformation, digital filtering, and the like, along with a threshold detection result, a maximum/minimum value extraction result, and the like of results of the foregoing operations).

The second-level measurement quantity is a basic measurement quantity, and includes a delay, Doppler, an angle, signal strength, and a multidimensional combination expression thereof.

The third-level measurement quantity is a basic attribute/state, and includes a distance, a speed, an angle/orientation, a radar cross-section (RCS), an acceleration, and the like.

The fourth-level measurement quantity is an advanced attribute/state, and includes a spatial location, whether a target exists, a track, an action, an expression, a vital sign, a quantity, an imaging result, weather, air quality, a shape, a material, a component, and the like.

Optionally, one of the sending node and the receiving node is the terminal, and the other is the core network device.

Referring to FIG. 7, FIG. 7 is a flowchart of a data transmission method according to an embodiment of this application. The method may be performed by a network-side device. As shown in FIG. 7, the method includes the following steps.

Step 701: A receiving node receives a first packet from a sending node based on a target protocol.

The target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

Optionally, the first packet further includes first information, the first information includes first indication information, and the first indication information is used to indicate one of the following:
the first packet is terminated at a target function of the receiving node;
the first packet is forwarded by the target function of the receiving node; and
the first packet is processed and then forwarded by the target function of the receiving node, where
the target function is a function that is of the receiving node and that supports the target protocol.

Optionally, the first information further includes at least one of the following:
forwarding node information corresponding to the first packet;
forwarding routing information corresponding to the first packet.

Optionally, in a case that the first packet is the packet generated based on the control information of the data plane, the first packet further includes second information, the second information includes second indication information, and the second indication information is used to indicate one of the following:
a second packet is terminated at the target function of the receiving node;
the second packet is forwarded by the target function of the receiving node; and
the second packet is processed and then forwarded by the target function of the receiving node, where
the second packet is a packet generated based on the data of the data plane, and the target function is a function that is of the receiving node and that supports the target protocol.

Optionally, the second information further includes at least one of the following:
forwarding node information corresponding to the second packet;
forwarding routing information corresponding to the second packet.

Optionally, the target protocol includes the first protocol, and that a receiving node receives a first packet from a sending node based on a target protocol includes:
receiving, by the receiving node, a first protocol data unit PDU from the sending node based on the NAS protocol, where the first PDU is a PDU generated based on the first protocol; and
delivering, by the receiving node, the first PDU to a first function of the receiving node based on the NAS protocol, where the first function supports the first protocol.

Optionally, a header of the first PDU includes third indication information, and the third indication information is used to indicate to deliver a service data unit SDU of the first PDU to the first function of the receiving node.

Optionally, the target protocol includes the second protocol, and that a receiving node receives a first packet from a sending node based on a target protocol includes:
receiving, by the receiving node, a second PDU from the sending node based on the access network protocol layer, where the second PDU is a PDU generated based on the second protocol; and
delivering, by the receiving node, the second PDU to a second function of the receiving node based on the access network protocol layer, where the second function supports the second protocol.

Optionally, a header of the second PDU includes fourth indication information, and the fourth indication information is used to indicate to deliver an SDU of the second PDU to the second function of the receiving node.

Optionally, the target protocol includes the first protocol, and that a receiving node receives a first packet from a sending node based on a target protocol includes:
receiving, by the receiving node, a first NAS message from the sending node based on the first protocol, where the first NAS message includes the first packet.

Optionally, the first NAS message includes fifth indication information, and the fifth indication information is used to indicate that the first NAS message is a data plane message.

Optionally, a message type of the first NAS message is a mobility management message or a session management message.

Optionally, a message type of the first NAS message is a data plane management message.

Optionally, the first NAS message is used to request to establish, modify, or release a data plane bearer, and the data plane bearer is a bearer corresponding to the second protocol.

Optionally, the fifth indication information in the first NAS message is used to indicate to request to establish, modify, or release a data plane PDU session; or
the message type of the first NAS message is a data plane PDU session, where
the data plane bearer is the data plane PDU session.

Optionally, the first packet is the packet generated based on the control information of the data plane, and the first NAS message further includes at least one data plane bearer to be activated; and the data plane bearer is a bearer corresponding to the second protocol.

Optionally, the first protocol is used by default to transmit the control information of the data plane.

Optionally, the target protocol includes the second protocol, and that a receiving node receives a first packet from a sending node based on a target protocol includes:
receiving, by the receiving node on a first bearer based on the second protocol, the first packet sent by the sending node, where the first bearer is a data plane bearer.

Optionally, a type of the data plane bearer includes at least one of the following: a first type; a second type;
the first type includes one of the following: a control bearer, a data bearer, and a control and data bearer; and
the second type includes one of the following: a bearer terminated at the second function of the receiving node, a bearer forwarded by the second function of the receiving node, and a bearer processed and then forwarded by the second function of the receiving node, where
the second function supports the second protocol.

Optionally, a type of the data plane bearer is a data bearer by default.

Optionally, the method further includes:
receiving, by the receiving node, a first message on a second bearer based on the second protocol, where
the first message is used to request to establish the first bearer, and the second bearer is an established data plane bearer.

Optionally, the first packet is the packet generated based on the data of the data plane; and
that a receiving node receives a first packet from a sending node based on a target protocol includes at least one of the following:
in a case of determining not to transmit data by using a data plane bearer, receiving, by the receiving node, the first packet from the sending node based on the first protocol;
in a case of determining to transmit data by using a data plane bearer, receiving, by the receiving node, the first packet from the sending node on the data plane bearer based on the second protocol.

Optionally, the first packet is the packet generated based on the data of the data plane;
before the receiving node receives the first packet from the sending node based on the target protocol, the method further includes:
sending, by the receiving node, first configuration information based on the first protocol, where the first configuration information includes an identifier of a data plane bearer; and
that a receiving node receives a first packet from a sending node based on a target protocol includes:
   receiving, by the receiving node on the data plane bearer based on the second protocol, the first packet sent by the sending node.

Optionally, the data of the data plane includes at least one of the following: positioning data; sensing data; computing data; artificial intelligence AI data; measurement data; user subscription data; context data.

Optionally, one of the sending node and the receiving node is a terminal, and the other is a core network device.

It should be noted that for a manner of implementing this implementation, reference may be made to the related descriptions of the embodiment shown in FIG. 4, and details are not described herein again.

The embodiments of this application are described below with reference to examples.

It should be noted that data involved in the embodiments of this application may include sensing data, QoE, MDT, SON, AI training data, an AI model, computing data, and the like. The following examples use the sensing data as an example for description. There may be two modes for collecting and transmitting the sensing data. In a first mode, data required for sensing is subjected to data collection coordination by using a data plane function (for example, a first function) and is subjected to data transmission based on a data plane bearer, so that when a plurality of sensing services can use same sensing measurement data, or a communication service can use same measurement data as a sensing service (for example, geographic location information reported by UE may be reused in positioning, sensing, and AI), reusing of measurement data of the UE is supported, and repeated measurement and reporting by the UE are avoided. In a second mode, data required for sensing is subjected to data transmission by using a data plane bearer, without being subjected to data collection coordination by using a first function.

Example 1: A data providing function is UE, a data plane control function is a core network function, the data plane control function coordinates data collection, and data transmission is terminated at a core network function.

This example is described by using the first mode of sensing data collection and transmission as an example. For the first mode of sensing data collection and transmission, it is assumed that a radio access network node and/or a core network sensing function (SF) have or has determined UE that receives a sensing signal and that performs measurement, and the determined UE supports a data plane.

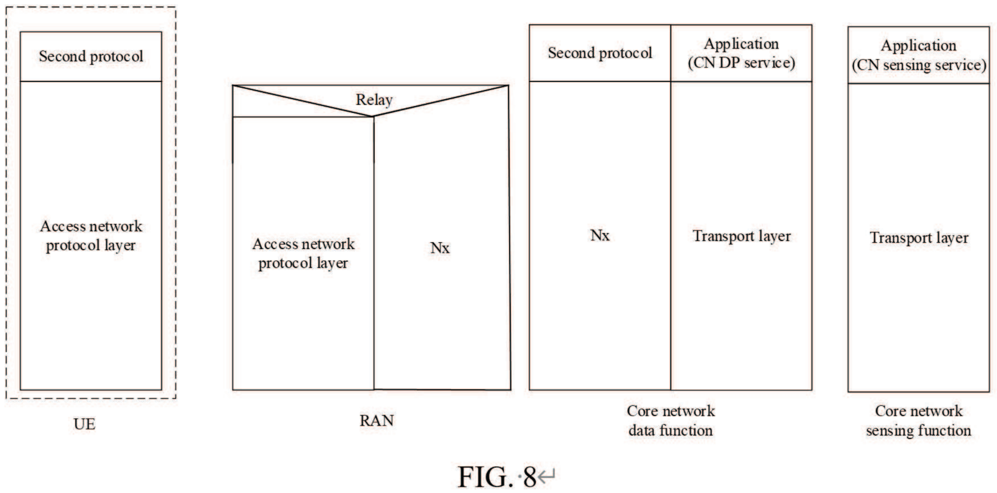

The data plane control function determines, based on a plurality of data requirements such as sensing, positioning, and an NWDAF, data that needs to be collected, and determines whether to perform data transmission based on a data plane bearer. If it is determined to perform data transmission based on a data plane bearer, the core network function sends a message for establishing a data plane bearer to the UE. For example, the core network function may send the message for establishing a data plane bearer to the UE based on a first protocol. For a manner of establishing the data plane bearer, refer to the related descriptions in the foregoing embodiment. Because data is coordinated by using the data plane control function, a type of the data plane bearer may be a data bearer terminated at a core network data function. In this case, the core network data function may store all received data, extract data required by a corresponding sensing function, and then send the data to a core network sensing function. Alternatively, the type of the data plane bearer may be a data bearer processed and forwarded by the core network data function. In this case, the core network data function may perform processing such as filtering on a plurality of pieces of sensing measurement data at different times/locations, to generate less sensing measurement data and/or sensing measurement data with higher precision, and then forward processed data to the core network sensing function. For example, in this example, a protocol stack of the UE, a RAN, and a CN may be shown in FIG. 8.

If it is determined not to perform data transmission based on a data plane bearer, the first protocol is used to transmit control information of the data plane, and is also used to transmit data of the data plane.

Specifically, a core network device may send a data collection request (also referred to as a data collection configuration, a measurement configuration, or the like) to the UE based on the first protocol. The data collection request is determined by the data plane control function. The data collection request may include at least one of the following:
a measurement object (Measurement Object), used to specify content to be measured, where optionally, the measurement object may further include a cell-specific offset, a blacklisted cell that needs to be ignored, and a whitelisted cell for which measurement is considered;
a reporting configuration (Reporting Configuration), used to specify how reporting should be completed, where reporting may be periodic or triggered by an event;
a measurement ID (Measurement ID), used to identify how to report a measurement value of a specific object, where there may be a plurality of reporting configurations for one measurement object, and one reporting configuration may be applied to a plurality of measurement objects; a unique ID is used for an association from each measurement object to a reporting configuration; and when the UE sends a measurement report (MeasurementReport) message, the MeasurementReport message includes an ID and a related metric (namely, a measurement result of each measurement quantity);
a measurement gap (Measurement Gap), used to indicate a period that may be used for the UE to perform measurement, and the like.

In the reporting configuration, an ID of a data plane bearer may be configured. The UE performs sensing data reporting based on the configured ID of the data plane bearer and based on the data plane bearer. After receiving data on the data plane bearer, the core network data function forwards the data to the core network sensing function based on a type of the data plane bearer.

Example 2: A data providing function is UE, a data plane control function is a core network function, and data transmission is terminated at the core network function.

This example is described by using the second mode of sensing data collection and transmission as an example. For the second mode of sensing data collection and transmission, it is assumed that a radio access network node and/or a core network sensing function have or has determined UE that receives a sensing signal and that performs measurement, and the determined UE supports a data plane.

The data plane control function receives sensing configuration information, for example, the data plane control function receives the sensing configuration information from the core network sensing function, and may forward the sensing configuration information to a sensing service function of the UE based on a first protocol. The sensing configuration information includes target indication information, used to indicate that the first protocol forwards the sensing configuration information and sensing configuration information that needs to be transparently forwarded by the first protocol (to prevent parsing by the first protocol, the sensing configuration information may be transmitted through encryption). Optionally, an SDU of the sensing configuration information includes a sensing service function ID or information that may be used to determine a suitable sensing service function. The sensing service function ID is used by a core network data function to forward received data to an indicated sensing service function based on the sensing service function ID. The information used to determine a suitable sensing service function may be a sensing service type (for example, rainfall monitoring or speed measurement), geographic location information, or the like. The radio access network node determines a suitable sensing service function based on the obtained sensing service type, the obtained geographic location information, and obtained load information of the sensing service function, and forwards received data to the determined sensing service function.

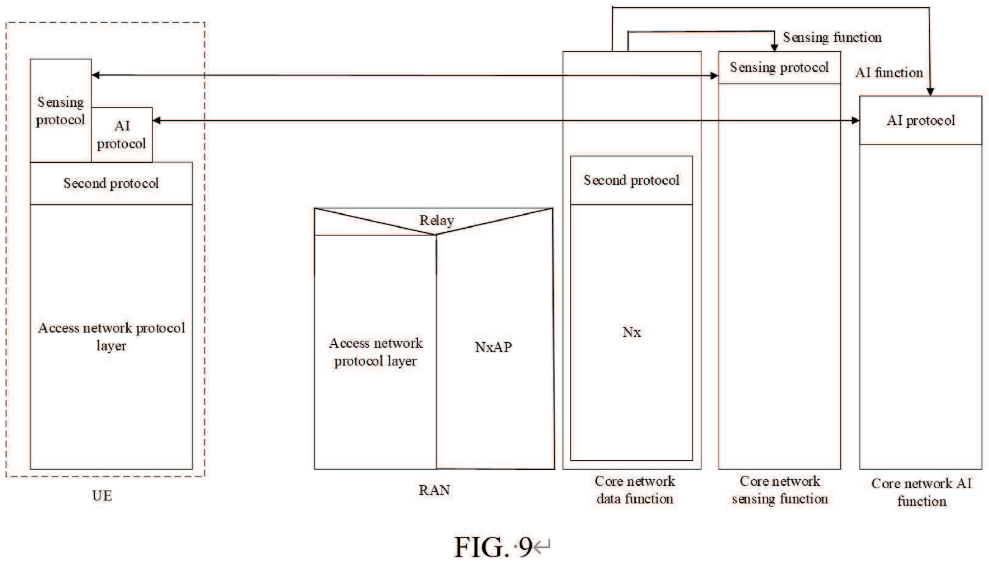

The data plane control function determines whether to perform data transmission based on a data plane bearer. If it is determined to perform data transmission based on a data plane bearer, the core network function sends a message for establishing a data plane bearer to the UE. For example, the core network function may send the message for establishing a data plane bearer to the UE based on the first protocol. For a manner of establishing the data plane bearer, refer to the related descriptions in the foregoing embodiment. Because the data is finally transmitted to the core network sensing function, a type of the data plane bearer is a data bearer forwarded by the core network data function or a data bearer processed and then forwarded by the core network data function. For the latter, the core network data function may perform processing such as filtering on a plurality of pieces of sensing measurement data at different times/locations, to generate less sensing measurement data and/or sensing measurement data with higher precision, and then forward processed data to the core network sensing function. For example, in this example, a protocol stack of the UE, a RAN, and a CN may be shown in FIG. 9. The core network data function, the core network sensing function, and a core network AI function may use a service-based interface solution, and the service-based interface solution needs to support efficient data transmission (for example, a file transfer protocol (FTP) or a Kafka manner).

If it is determined not to perform data transmission based on a data plane bearer, the first protocol is used to transmit control information of the data plane, and is also used to transmit data of the data plane.

It should be noted that there may be two manners for a reporting configuration of the UE. In one manner, the data plane control function configures an ID of a data plane bearer based on the SDU of the sensing configuration information forwarded by the first protocol, so that the UE performs sensing data reporting based on the configured ID of the data plane bearer and based on the data plane bearer. After receiving data carried on the data plane, the core network data function forwards the data to the core network sensing function based on a type of the data plane bearer. In the other manner, a core network device (for example, the data plane control function) sends a data collection request to the UE based on the first protocol. The data collection request includes at least an ID of a data plane bearer. In this way, the UE can also perform sensing data reporting based on the configured ID of the data plane bearer and based on the data plane bearer. After receiving data carried on the data plane, the core network data function forwards the data to the core network sensing function based on a type of the data plane bearer.

Example 3: A data providing function is UE, a data plane control function is a radio access network node, and data transmission is terminated at the radio access network node.

A main difference between this example and Example 1 or Example 2 lies in that if required data needs to be sent to the radio access network node by using a core network data function, it usually indicates that some information (for example, a persistent identifier of the UE and location information) of obtained data is suitable for the radio access network node to obtain. Therefore, this embodiment focuses on the following: the core network data function needs to preprocess data, to delete or convert information not suitable for a RAN to obtain. For example, the persistent identifier of the UE is converted into a random temporary identifier or the like. For a sensing data collection process in this example, refer to the related descriptions in Example 1 or Example 2. Details are not described herein again.

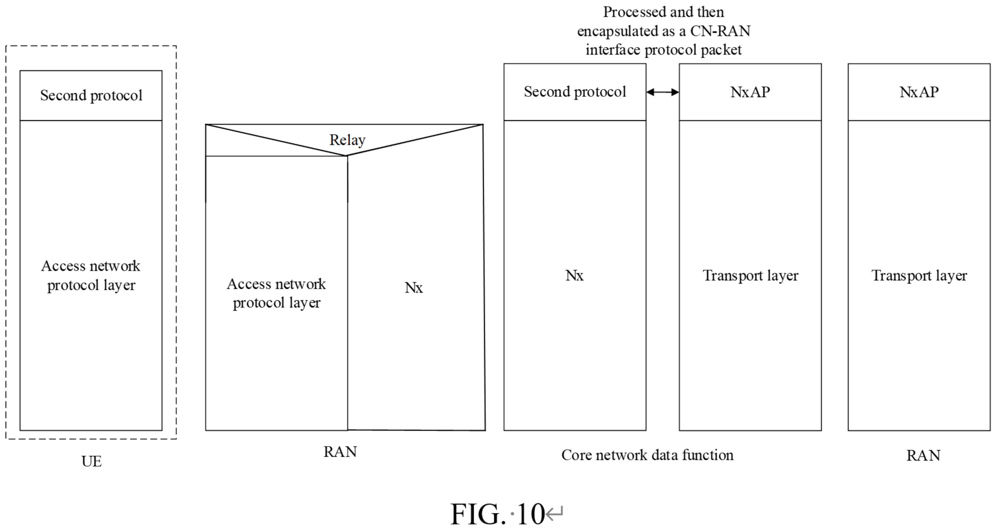

If it is determined to perform data transmission based on a data plane bearer, a core network function sends a message for establishing a data plane bearer to the UE. For example, the core network function may send the message for establishing a data plane bearer to the UE based on a first protocol. For a manner of establishing the data plane bearer, refer to the related descriptions in the foregoing embodiment. Because data is finally transmitted to a radio access network sensing function, a type of the data plane bearer is a bearer processed and then forwarded by the core network data function, and the core network data function processes data based on obtained information, and sends processed data to the radio access network node. For example, in this example, a protocol stack of the UE, the RAN, and a CN may be shown in FIG. 10. In FIG. 10, a RAN node that transparently transmits data of a second protocol on the left side of the core network function and a RAN node that receives the required data on the right side of the core network function may be different nodes.

It should be noted that similar to a case that an interface between an access network node and a core network AMF in a 5G protocol is referred to as an N2 interface, an interface between the access network node and a core network UPF is referred to as an N3 interface. In the foregoing figures, Nx refers to an interface between the access network node and the core network data function, and NxAP refers to an application protocol of the Nx interface, and is used to support Nx interface management and data plane message exchange.

It can be learned from the foregoing descriptions that in the embodiments of this application, at least one of the following is introduced between UE and a CN: a first protocol; a second protocol. The first protocol is based on a NAS protocol, and the second protocol is based on an access network protocol layer (for example, a 6G-AN protocol layer), or the second protocol is based on a transport protocol layer and the access network protocol layer. A NAS data control container (for example, a NAS-DC) and a data plane bearer are introduced. For the NAS data control container, first indication information in an SDU of the NAS data control container indicates whether a packet is control information or control information and data, and indicates a processing manner of the packet at a receiving node. For the data plane bearer, a type of the data plane bearer may be indicated in configuration information added to the data plane bearer. If the data plane bearer is a data bearer by default, and processing manners of different data are flexible and variable, the processing manner of the packet at the receiving node may also be indicated, by using first indication information, in an SDU carried on a data plane. The type of the data plane bearer may be classified into a control bearer, a data bearer, and a control and data bearer depending on whether carried data is control information or data. Optionally, the first protocol is used by default to transmit the control information of the data plane, and the data plane bearer is the data bearer by default. A function/manner of processing the bearer by a core network data function may be classified into terminating at the receiving node, forwarding by the receiving node, and forwarding and subsequent processing by the receiving node.

In addition, the solution provided in the embodiments of this application supports control and data separation. This solution can provide a unified bearer based on a data collection requirement and an intra-mobile-network data transmission requirement to support control and data transmission, and can also provide different types of bearers to support control and data separated transmission. In addition, the solution can further support transmitted data in being terminated at a core network data function node, forwarded by using the core network data function, or processed and then forwarded by using the core network data function, as required. In addition, this solution supports both data collection coordination-based data collection and transmission and data collection and transmission not decided by a data plane function. Therefore, the solution can meet a plurality of potential data collection requirements and intra-mobile-network data transmission requirements between UE and a CN.

It should be noted that the data transmission method provided in the embodiments of this application may be performed by a data transmission apparatus or a control module that is in the data transmission apparatus and that is configured to perform the data transmission method. In the embodiments of this application, the data transmission apparatus provided in the embodiments of this application is described by using an example in which the data transmission apparatus performs the data transmission method.

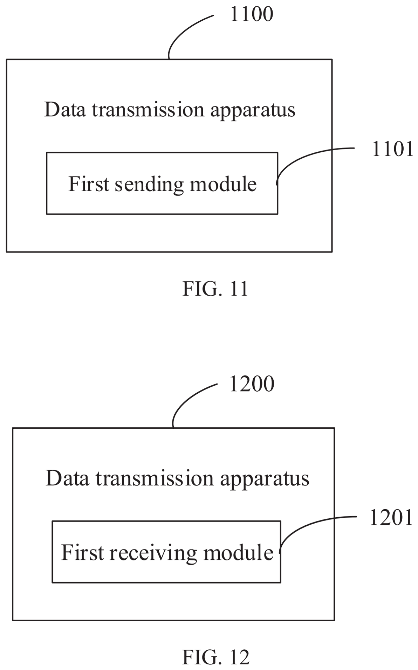

Referring to FIG. 11, FIG. 11 is a structural diagram of a data transmission apparatus according to an embodiment of this application. The data transmission apparatus is applied to a sending node. As shown in FIG. 11, the data transmission apparatus 1100 includes:
a first sending module 1101, configured to send a first packet to a receiving node based on a target protocol, where
the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

Optionally, the first packet further includes first information, the first information includes first indication information, and the first indication information is used to indicate one of the following:
the first packet is terminated at a target function of the receiving node;
the first packet is forwarded by the target function of the receiving node; and
the first packet is processed and then forwarded by the target function of the receiving node, where
the target function is a function that is of the receiving node and that supports the target protocol.

Optionally, the first information further includes at least one of the following:
forwarding node information corresponding to the first packet;
forwarding routing information corresponding to the first packet.

Optionally, in a case that the first packet is the packet generated based on the control information of the data plane, the first packet further includes second information, the second information includes second indication information, and the second indication information is used to indicate one of the following:
a second packet is terminated at the target function of the receiving node;
the second packet is forwarded by the target function of the receiving node; and
the second packet is processed and then forwarded by the target function of the receiving node, where
the second packet is a packet generated based on the data of the data plane, and the target function is a function that is of the receiving node and that supports the target protocol.

Optionally, the second information further includes at least one of the following:
forwarding node information corresponding to the second packet;
forwarding routing information corresponding to the second packet.

Optionally, the target protocol includes the first protocol, and the first sending module is specifically configured to:
generate a first protocol data unit PDU of the data plane based on the first protocol; and
send the first PDU to the receiving node based on the NAS protocol.

Optionally, a header of the first PDU includes third indication information, the third indication information is used to indicate to deliver a service data unit SDU of the first PDU to a first function of the receiving node, and the first function supports the first protocol.

Optionally, the target protocol includes the second protocol, and the first sending module is specifically configured to:
generate a second PDU of the data plane based on the second protocol; and
send the second PDU to the receiving node based on the access network protocol layer.

Optionally, a header of the second PDU includes fourth indication information, the fourth indication information is used to indicate to deliver an SDU of the second PDU to a second function of the receiving node, and the second function supports the second protocol.

Optionally, the target protocol includes the first protocol, and the first sending module is specifically configured to:
send a first NAS message to the receiving node based on the first protocol, where the first NAS message includes the first packet.

Optionally, the first NAS message includes fifth indication information, and the fifth indication information is used to indicate that the first NAS message is a data plane message.

Optionally, a message type of the first NAS message is a mobility management message or a session management message.

Optionally, a message type of the first NAS message is a data plane management message.

Optionally, the first NAS message is used to request to establish, modify, or release a data plane bearer, and the data plane bearer is a bearer corresponding to the second protocol.

Optionally, the fifth indication information in the first NAS message is used to indicate to request to establish, modify, or release a data plane PDU session; or
the message type of the first NAS message is a data plane PDU session, where
the data plane bearer is the data plane PDU session.

Optionally, the first packet is the packet generated based on the control information of the data plane, and the first NAS message further includes at least one data plane bearer to be activated; and the data plane bearer is a bearer corresponding to the second protocol.

Optionally, the first protocol is used by default to transmit the control information of the data plane.

Optionally, the target protocol includes the second protocol, and the first sending module is specifically configured to:
send the first packet to the receiving node on a first bearer based on the second protocol, where the first bearer is a data plane bearer.

Optionally, a type of the data plane bearer includes at least one of the following: a first type; a second type;
the first type includes one of the following: a control bearer, a data bearer, and a control and data bearer; and
the second type includes one of the following: a bearer terminated at the second function of the receiving node, a bearer forwarded by the second function of the receiving node, and a bearer processed and then forwarded by the second function of the receiving node, where
the second function supports the second protocol.

Optionally, a type of the data plane bearer is a data bearer by default.

Optionally, the first sending module is further configured to send a first message on a second bearer based on the second protocol, where
the first message is used to request to establish the first bearer, and the second bearer is an established data plane bearer.

Optionally, the first packet is the packet generated based on the data of the data plane; and
the first sending module is specifically configured to perform at least one of the following:
in a case of determining not to transmit data by using a data plane bearer, sending the first packet to the receiving node based on the first protocol;
in a case of determining to transmit data by using a data plane bearer, sending the first packet to the receiving node on the data plane bearer based on the second protocol.

Optionally, the first packet is the packet generated based on the data of the data plane;
the apparatus further includes:
a receiving module, configured to: before the first packet is sent to the receiving node based on the target protocol, receive first configuration information based on the first protocol, where the first configuration information includes an identifier of a data plane bearer; and
the first sending module is specifically configured to send the first packet to the receiving node on the data plane bearer based on the second protocol.

Optionally, the data of the data plane includes at least one of the following: positioning data; sensing data; computing data; artificial intelligence AI data; measurement data; user subscription data; context data.

Optionally, one of the sending node and the receiving node is a terminal, and the other is a core network device.

The data transmission apparatus in this embodiment of this application may be an electronic device, for example, an electronic device with an operating system; or may be a component in an electronic device, for example, an integrated circuit or a chip. The electronic device may be a terminal or a network-side device, or may be another device other than the terminal or the network-side device. For example, the terminal may include but is not limited to the types of the terminal 11 listed above, the network-side device may include but is not limited to the types of the network-side device 12 listed above, and the another device may be a server, a network attached storage (NAS), or the like. This is not specifically limited in this embodiment of this application.

The data transmission apparatus provided in this embodiment of this application can implement the processes implemented in the method embodiment of FIG. 4, and achieve the same technical effects. To avoid repetition, details are not described herein again.

Referring to FIG. 12, FIG. 12 is a structural diagram of a data transmission apparatus according to an embodiment of this application. The data transmission apparatus is applied to a receiving node. As shown in FIG. 12, the data transmission apparatus 1200 includes:
a first receiving module 1201, configured to receive a first packet from a sending node based on a target protocol, where
the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

Optionally, the first packet further includes first information, the first information includes first indication information, and the first indication information is used to indicate one of the following:
the first packet is terminated at a target function of the receiving node;
the first packet is forwarded by the target function of the receiving node; and
the first packet is processed and then forwarded by the target function of the receiving node, where
the target function is a function that is of the receiving node and that supports the target protocol.

Optionally, the first information further includes at least one of the following:
forwarding node information corresponding to the first packet;
forwarding routing information corresponding to the first packet.

Optionally, in a case that the first packet is the packet generated based on the control information of the data plane, the first packet further includes second information, the second information includes second indication information, and the second indication information is used to indicate one of the following:
a second packet is terminated at the target function of the receiving node;
the second packet is forwarded by the target function of the receiving node; and
the second packet is processed and then forwarded by the target function of the receiving node, where
the second packet is a packet generated based on the data of the data plane, and the target function is a function that is of the receiving node and that supports the target protocol.

Optionally, the second information further includes at least one of the following:
forwarding node information corresponding to the second packet;
forwarding routing information corresponding to the second packet.

Optionally, the target protocol includes the first protocol, and the first receiving module is specifically configured to:
receive a first protocol data unit PDU from the sending node based on the NAS protocol, where the first PDU is a PDU generated based on the first protocol; and
deliver the first PDU to a first function of the receiving node based on the NAS protocol, where the first function supports the first protocol.

Optionally, a header of the first PDU includes third indication information, the third indication information is used to indicate to deliver a service data unit SDU of the first PDU to the first function of the receiving node, and the first function supports the first protocol.

Optionally, the target protocol includes the second protocol, and the first receiving module is specifically configured to:
receive a second PDU from the sending node based on the access network protocol layer, where the second PDU is a PDU generated based on the second protocol; and
deliver the second PDU to a second function of the receiving node based on the access network protocol layer, where the second function supports the second protocol.

Optionally, a header of the second PDU includes fourth indication information, and the fourth indication information is used to indicate to deliver an SDU of the second PDU to the second function of the receiving node.

Optionally, the target protocol includes the first protocol, and the first receiving module is specifically configured to:
receive a first NAS message from the sending node based on the first protocol, where the first NAS message includes the first packet.

Optionally, the first NAS message includes fifth indication information, and the fifth indication information is used to indicate that the first NAS message is a data plane message.

Optionally, a message type of the first NAS message is a mobility management message or a session management message.

Optionally, a message type of the first NAS message is a data plane management message.

Optionally, the first NAS message is used to request to establish, modify, or release a data plane bearer, and the data plane bearer is a bearer corresponding to the second protocol.

Optionally, the fifth indication information in the first NAS message is used to indicate to request to establish, modify, or release a data plane PDU session; or
the message type of the first NAS message is a data plane PDU session, where
the data plane bearer is the data plane PDU session.

Optionally, the first packet is the packet generated based on the control information of the data plane, and the first NAS message further includes at least one data plane bearer to be activated; and the data plane bearer is a bearer corresponding to the second protocol.

Optionally, the first protocol is used by default to transmit the control information of the data plane.

Optionally, the target protocol includes the second protocol, and the first receiving module is specifically configured to:
receive, on a first bearer based on the second protocol, the first packet sent by the sending node, where the first bearer is a data plane bearer.

Optionally, a type of the data plane bearer includes at least one of the following: a first type; a second type;
the first type includes one of the following: a control bearer, a data bearer, and a control and data bearer; and
the second type includes one of the following: a bearer terminated at the second function of the receiving node, a bearer forwarded by the second function of the receiving node, and a bearer processed and then forwarded by the second function of the receiving node, where
the second function supports the second protocol.

Optionally, a type of the data plane bearer is a data bearer by default.

Optionally, the first receiving module is further configured to:
receive a first message on a second bearer based on the second protocol, where
the first message is used to request to establish the first bearer, and the second bearer is an established data plane bearer.

Optionally, the first packet is the packet generated based on the data of the data plane; and
the first receiving module is specifically configured to perform at least one of the following:
in a case of determining not to transmit data by using a data plane bearer, receiving the first packet from the sending node based on the first protocol;
in a case of determining to transmit data by using a data plane bearer, receiving the first packet from the sending node on the data plane bearer based on the second protocol.

Optionally, the first packet is the packet generated based on the data of the data plane;
the apparatus further includes:
a second sending module, configured to: before the first packet is received from the sending node based on the target protocol, send first configuration information based on the first protocol, where the first configuration information includes an identifier of a data plane bearer; and
the first receiving module is specifically configured to receive, on the data plane bearer based on the second protocol, the first packet sent by the sending node.

Optionally, the data of the data plane includes at least one of the following: positioning data; sensing data; computing data; artificial intelligence AI data; measurement data; user subscription data; context data.

Optionally, one of the sending node and the receiving node is a terminal, and the other is a core network device.

The data transmission apparatus in this embodiment of this application may be an electronic device, for example, an electronic device with an operating system; or may be a component in an electronic device, for example, an integrated circuit or a chip. The electronic device may be a terminal or a network-side device, or may be another device other than the terminal or the network-side device. For example, the terminal may include but is not limited to the types of the terminal 11 listed above, the network-side device may include but is not limited to the types of the network-side device 12 listed above, and the another device may be a server, a network attached storage (NAS), or the like. This is not specifically limited in this embodiment of this application.

The data transmission apparatus provided in this embodiment of this application can implement the processes implemented in the method embodiment of FIG. 7, and achieve the same technical effects. To avoid repetition, details are not described herein again.

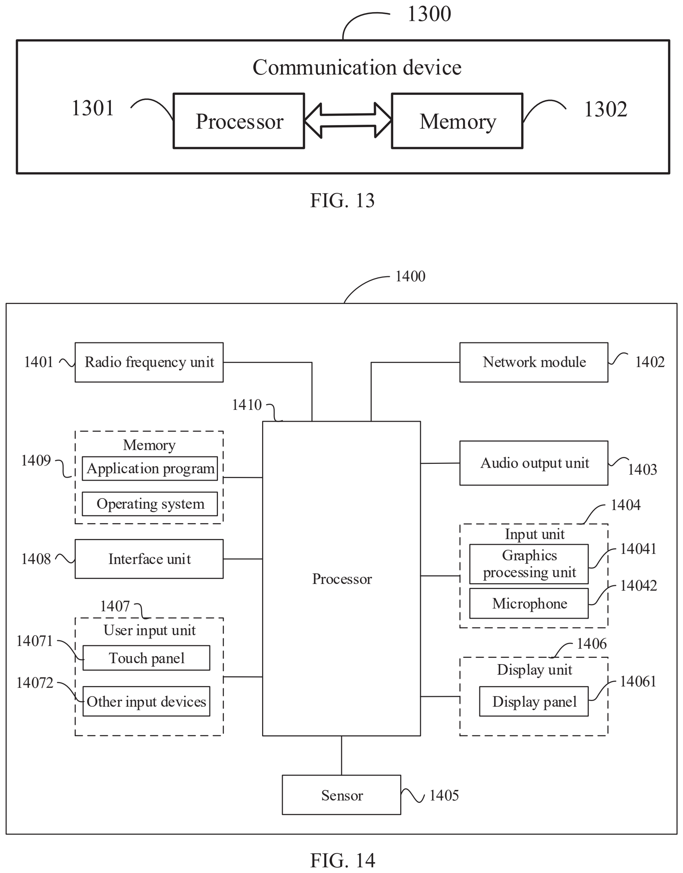

Optionally, as shown in FIG. 13, an embodiment of this application further provides a communication device 1300, including a processor 1301 and a memory 1302. The memory 1302 stores a program or instructions capable of running on the processor 1301. For example, when the communication device 1300 is a sending node, the program or the instructions are executed by the processor 1301 to implement the steps in the foregoing sending node-side data transmission method embodiment, and the same technical effects can be achieved. When the communication device 1300 is a receiving node, the program or the instructions are executed by the processor 1301 to implement the steps in the foregoing receiving node-side data transmission method embodiment, and the same technical effects can be achieved. To avoid repetition, details are not described herein again.

An embodiment of this application further provides a sending node, including a processor and a communication interface. The communication interface is configured to send a first packet to a receiving node based on a target protocol, where the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane. This sending node embodiment corresponds to the foregoing sending node-side method embodiment. Each implementation process and implementation in the foregoing method embodiment are applicable to the sending node embodiment, and the same technical effects can be achieved. Specifically, FIG. 14 is a schematic diagram of a hardware structure of a sending node according to an embodiment of this application.

The sending node 1400 includes but is not limited to at least some of the following components: a radio frequency unit 1401, a network module 1402, an audio output unit 1403, an input unit 1404, a sensor 1405, a display unit 1406, a user input unit 1407, an interface unit 1408, a memory 1409, a processor 1410, and the like.

A person skilled in the art may understand that the sending node 1400 may further include a power supply (for example, a battery) that supplies power to each component. The power supply may be logically connected to the processor 1410 by using a power management system, to implement functions such as charging management, discharging management, and power consumption management by using the power management system. The structure of the sending node shown in FIG. 14 does not constitute a limitation on the sending node. The sending node may include more or fewer components than those shown in the figure, or combine some components, or have different component arrangements. Details are not described herein.

It should be understood that in this embodiment of this application, the input unit 1404 may include a graphics processing unit (GPU) 14041 and a microphone 14042. The graphics processing unit 14041 processes image data of a still picture or a video obtained by an image capture apparatus (for example, a camera) in a video capture mode or an image capture mode. The display unit 1406 may include a display panel 14061, and the display panel 14061 may be configured in a form of a liquid crystal display, an organic light-emitting diode, or the like. The user input unit 1407 includes at least one of the following: a touch panel 14071; other input devices 14072. The touch panel 14071 is also referred to as a touchscreen. The touch panel 14071 may include two parts: a touch detection apparatus and a touch controller. The other input devices 14072 may include but are not limited to a physical keyboard, a function key (for example, a volume control key or an on/off key), a trackball, a mouse, and a joystick. Details are not described herein.

In this embodiment of this application, after receiving downlink data from a network-side device, the radio frequency unit 1401 may transmit the downlink data to the processor 1410 for processing. In addition, the radio frequency unit 1401 may send uplink data to the network-side device. Generally, the radio frequency unit 1401 includes but is not limited to an antenna, an amplifier, a transceiver, a coupler, a low-noise amplifier, a duplexer, and the like.

The memory 1409 may be configured to store a software program or instructions and various types of data. The memory 1409 may mainly include a first storage area for storing a program or instructions and a second storage area for storing data. The first storage area may store an operating system, an application program or instructions required by at least one function (for example, a sound play function or an image play function), and the like. In addition, the memory 1409 may include a volatile memory or a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM), and a direct rambus random access memory (DRRAM). The memory 1409 in this embodiment of this application includes but is not limited to these memories and any other suitable type of memory.

The processor 1410 may include one or more processing units. Optionally, the processor 1410 integrates an application processor and a modem processor, where the application processor mainly processes operations related to an operating system, a user interface, an application program, and the like, and the modem processor mainly processes a wireless communication signal, such as a baseband processor. It may be understood that the modem processor may not be integrated into the processor 1410.

The radio frequency unit 1401 is configured to send a first packet to a receiving node based on a target protocol, where the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane.

It may be understood that for implementation processes of the implementations mentioned in this embodiment, reference may be made to the related descriptions in the foregoing method embodiment, and same or corresponding technical effects are achieved. To avoid repetition, details are not described herein again.

An embodiment of this application further provides a receiving node, including a processor and a communication interface. The communication interface is configured to receive a first packet from a sending node based on a target protocol, where the target protocol includes at least one of the following: a first protocol of a data plane; a second protocol of the data plane, the first protocol is located above a non-access stratum NAS protocol, the second protocol is located above an access network protocol layer, and the first packet includes at least one of the following: a packet generated based on control information of the data plane; a packet generated based on data of the data plane. This receiving node embodiment corresponds to the foregoing receiving node-side method embodiment. Each implementation process and implementation in the foregoing method embodiment are applicable to the receiving node embodiment, and the same technical effects can be achieved.

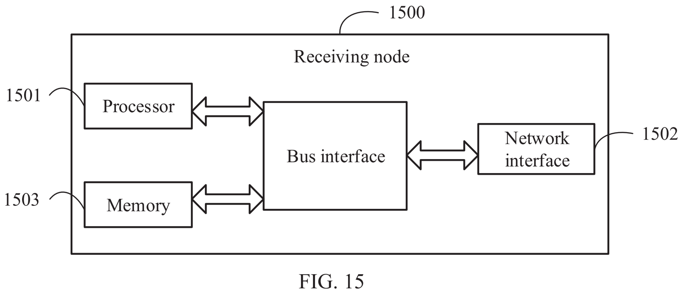

Specifically, an embodiment of this application further provides a receiving node. As shown in FIG. 15, the receiving node 1500 includes a processor 1501, a network interface 1502, and a memory 1503. The network interface 1502 is, for example, a common public radio interface (CPRI).

Specifically, the receiving node 1500 in this embodiment of this application further includes instructions or a program that is stored in the memory 1503 and that is capable of running on the processor 1501. The processor 1501 invokes the instructions or the program in the memory 1503 to perform the method performed by the modules shown in FIG. 12, and the same technical effects are achieved. To avoid repetition, details are not described herein again.

An embodiment of this application further provides a readable storage medium. The readable storage medium stores a program or instructions. The program or the instructions are executed by a processor to implement the processes in the foregoing data transmission method embodiment, and the same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes in the foregoing data transmission method embodiment, and the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing data transmission method embodiment, and the same technical effects can be achieved. To avoid repetition, details are not described herein again.

An embodiment of this application further provides a data transmission system, including a terminal and a network-side device. The terminal is configured to perform the processes in FIG. 4 and the foregoing method embodiments. The network-side device is configured to perform the processes in FIG. 7 and the foregoing method embodiments. The same technical effects can be achieved. To avoid repetition, details are not described herein again.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A data transmission method, comprising:
sending, by a sending node, a first packet to a receiving node based on a target protocol, wherein
the target protocol comprises at least one of the following: a first protocol of a data plane; a second protocol of the data plane, the first protocol is located above a non-access stratum NAS protocol, the second protocol is located above an access network protocol layer, and the first packet comprises at least one of the following: a packet generated based on control information of the data plane; a packet generated based on data of the data plane.

2. The method according to claim 1, wherein the first packet further comprises first information, the first information comprises first indication information, and the first indication information is used to indicate one of the following:
the first packet is terminated at a target function of the receiving node;
the first packet is forwarded by the target function of the receiving node; and
the first packet is processed and then forwarded by the target function of the receiving node, wherein
the target function is a function that is of the receiving node and that supports the target protocol.

3. The method according to claim 2, wherein the first information further comprises at least one of the following:
forwarding node information corresponding to the first packet;
forwarding routing information corresponding to the first packet.

4. The method according to any one of claims 1 to 3, wherein in a case that the first packet is the packet generated based on the control information of the data plane, the first packet further comprises second information, the second information comprises second indication information, and the second indication information is used to indicate one of the following:
a second packet is terminated at the target function of the receiving node;
the second packet is forwarded by the target function of the receiving node; and
the second packet is processed and then forwarded by the target function of the receiving node, wherein
the second packet is a packet generated based on the data of the data plane, and the target function is a function that is of the receiving node and that supports the target protocol.

5. The method according to claim 4, wherein the second information further comprises at least one of the following:
forwarding node information corresponding to the second packet;
forwarding routing information corresponding to the second packet.

6. The method according to any one of claims 1 to 5, wherein the target protocol comprises the first protocol, and the sending, by a sending node, a first packet to a receiving node based on a target protocol comprises:
generating, by the sending node, a first protocol data unit PDU of the data plane based on the first protocol; and
sending, by the sending node, the first PDU to the receiving node based on the NAS protocol.

7. The method according to claim 6, wherein a header of the first PDU comprises third indication information, the third indication information is used to indicate to deliver a service data unit SDU of the first PDU to a first function of the receiving node, and the first function supports the first protocol.

8. The method according to any one of claims 1 to 5, wherein the target protocol comprises the second protocol, and the sending, by a sending node, a first packet to a receiving node based on a target protocol comprises:
generating, by the sending node, a second PDU of the data plane based on the second protocol; and
sending, by the sending node, the second PDU to the receiving node based on the access network protocol layer.

9. The method according to claim 8, wherein a header of the second PDU comprises fourth indication information, the fourth indication information is used to indicate to deliver an SDU of the second PDU to a second function of the receiving node, and the second function supports the second protocol.

10. The method according to any one of claims 1 to 9, wherein the target protocol comprises the first protocol, and the sending, by a sending node, a first packet to a receiving node based on a target protocol comprises:
sending, by the sending node, a first NAS message to the receiving node based on the first protocol, wherein the first NAS message comprises the first packet.

11. The method according to claim 10, wherein the first NAS message comprises fifth indication information, and the fifth indication information is used to indicate that the first NAS message is a data plane message.

12. The method according to claim 11, wherein a message type of the first NAS message is a mobility management message or a session management message.

13. The method according to claim 10, wherein a message type of the first NAS message is a data plane management message.

14. The method according to any one of claims 10 to 13, wherein the first NAS message is used to request to establish, modify, or release a data plane bearer, and the data plane bearer is a bearer corresponding to the second protocol.

15. The method according to claim 14, wherein the fifth indication information in the first NAS message is used to indicate to request to establish, modify, or release a data plane PDU session; or
the message type of the first NAS message is a data plane PDU session, wherein
the data plane bearer is the data plane PDU session.

16. The method according to any one of claims 10 to 13, wherein the first packet is the packet generated based on the control information of the data plane, and the first NAS message further comprises at least one data plane bearer to be activated; and the data plane bearer is a bearer corresponding to the second protocol.

17. The method according to any one of claims 1 to 16, wherein the first protocol is used by default to transmit the control information of the data plane.

18. The method according to any one of claims 1 to 17, wherein the target protocol comprises the second protocol, and the sending, by a sending node, a first packet to a receiving node based on a target protocol comprises:
sending, by the sending node, the first packet to the receiving node on a first bearer based on the second protocol, wherein the first bearer is a data plane bearer.

19. The method according to claim 18, wherein a type of the data plane bearer comprises at least one of the following: a first type; a second type;
the first type comprises one of the following: a control bearer, a data bearer, and a control and data bearer; and
the second type comprises one of the following: a bearer terminated at the second function of the receiving node, a bearer forwarded by the second function of the receiving node, and a bearer processed and then forwarded by the second function of the receiving node, wherein
the second function supports the second protocol.

20. The method according to claim 18, wherein a type of the data plane bearer is a data bearer by default.

21. The method according to any one of claims 18 to 20, wherein the method further comprises:
sending, by the sending node, a first message on a second bearer based on the second protocol, wherein
the first message is used to request to establish the first bearer, and the second bearer is an established data plane bearer.

22. The method according to any one of claims 1 to 21, wherein the first packet is the packet generated based on the data of the data plane; and
the sending, by a sending node, a first packet to a receiving node based on a target protocol comprises at least one of the following:
in a case of determining not to transmit data by using a data plane bearer, sending, by the sending node, the first packet to the receiving node based on the first protocol;
in a case of determining to transmit data by using a data plane bearer, sending, by the sending node, the first packet to the receiving node on the data plane bearer based on the second protocol.

23. The method according to any one of claims 1 to 21, wherein the first packet is the packet generated based on the data of the data plane;
before the sending, by a sending node, a first packet to a receiving node based on a target protocol, the method further comprises:
receiving, by the sending node, first configuration information based on the first protocol, wherein the first configuration information comprises an identifier of a data plane bearer; and
the sending, by a sending node, a first packet to a receiving node based on a target protocol comprises:
sending, by the sending node, the first packet to the receiving node on the data plane bearer based on the second protocol.

24. The method according to any one of claims 1 to 23, wherein the data of the data plane comprises at least one of the following: positioning data; sensing data; computing data; artificial intelligence AI data; measurement data; user subscription data; context data.

25. The method according to any one of claims 1 to 24, wherein one of the sending node and the receiving node is a terminal, and the other is a core network device.

26. A data transmission method, comprising:
receiving, by a receiving node, a first packet from a sending node based on a target protocol, wherein
the target protocol comprises at least one of the following: a first protocol of a data plane; a second protocol of the data plane, the first protocol is located above a non-access stratum NAS protocol, the second protocol is located above an access network protocol layer, and the first packet comprises at least one of the following: a packet generated based on control information of the data plane; a packet generated based on data of the data plane.

27. The method according to claim 26, wherein the first packet further comprises first information, the first information comprises first indication information, and the first indication information is used to indicate one of the following:
the first packet is terminated at a target function of the receiving node;
the first packet is forwarded by the target function of the receiving node; and
the first packet is processed and then forwarded by the target function of the receiving node, wherein
the target function is a function that is of the receiving node and that supports the target protocol.

28. The method according to either of claims 26 and 27, wherein in a case that the first packet is the packet generated based on the control information of the data plane, the first packet further comprises second information, the second information comprises second indication information, and the second indication information is used to indicate one of the following:
a second packet is terminated at the target function of the receiving node;
the second packet is forwarded by the target function of the receiving node; and
the second packet is processed and then forwarded by the target function of the receiving node, wherein
the second packet is a packet generated based on the data of the data plane, and the target function is a function that is of the receiving node and that supports the target protocol.

29. The method according to any one of claims 26 to 28, wherein the target protocol comprises the first protocol, and the receiving, by a receiving node, a first packet from a sending node based on a target protocol comprises:
receiving, by the receiving node, a first protocol data unit PDU from the sending node based on the NAS protocol, wherein the first PDU is a PDU generated based on the first protocol; and
delivering, by the receiving node, the first PDU to a first function of the receiving node based on the NAS protocol, wherein the first function supports the first protocol.

30. The method according to any one of claims 26 to 29, wherein the target protocol comprises the second protocol, and the receiving, by a receiving node, a first packet from a sending node based on a target protocol comprises:
receiving, by the receiving node, a second PDU from the sending node based on the access network protocol layer, wherein the second PDU is a PDU generated based on the second protocol; and
delivering, by the receiving node, the second PDU to a second function of the receiving node based on the access network protocol layer, wherein the second function supports the second protocol.

31. The method according to any one of claims 26 to 30, wherein the target protocol comprises the first protocol, and the receiving, by a receiving node, a first packet from a sending node based on a target protocol comprises:
receiving, by the receiving node, a first NAS message from the sending node based on the first protocol, wherein the first NAS message comprises the first packet.

32. The method according to any one of claims 26 to 31, wherein the first protocol is used by default to transmit the control information of the data plane.

33. The method according to any one of claims 26 to 32, wherein the target protocol comprises the second protocol, and the receiving, by a receiving node, a first packet from a sending node based on a target protocol comprises:
receiving, by the receiving node on a first bearer based on the second protocol, the first packet sent by the sending node, wherein the first bearer is a data plane bearer.

34. The method according to claim 33, wherein a type of the data plane bearer is a data bearer by default.

35. The method according to either of claims 33 and 34, wherein the method further comprises:
receiving, by the receiving node, a first message on a second bearer based on the second protocol, wherein
the first message is used to request to establish the first bearer, and the second bearer is an established data plane bearer.

36. The method according to any one of claims 26 to 35, wherein the first packet is the packet generated based on the data of the data plane; and
the receiving, by a receiving node, a first packet from a sending node based on a target protocol comprises at least one of the following:
in a case of determining not to transmit data by using a data plane bearer, receiving, by the receiving node, the first packet from the sending node based on the first protocol;
in a case of determining to transmit data by using a data plane bearer, receiving, by the receiving node, the first packet from the sending node on the data plane bearer based on the second protocol.

37. The method according to any one of claims 26 to 35, wherein the first packet is the packet generated based on the data of the data plane;
before the receiving, by a receiving node, a first packet from a sending node based on a target protocol, the method further comprises:
sending, by the receiving node, first configuration information based on the first protocol, wherein the first configuration information comprises an identifier of a data plane bearer; and
the receiving, by a receiving node, a first packet from a sending node based on a target protocol comprises:
receiving, by the receiving node on the data plane bearer based on the second protocol, the first packet sent by the sending node.

38. A data transmission apparatus, comprising:
a first sending module, configured to send a first packet to a receiving node based on a target protocol, wherein
the target protocol comprises at least one of the following: a first protocol of a data plane; a second protocol of the data plane, the first protocol is located above a non-access stratum NAS protocol, the second protocol is located above an access network protocol layer, and the first packet comprises at least one of the following: a packet generated based on control information of the data plane; a packet generated based on data of the data plane.

39. A data transmission apparatus, comprising:
a first receiving module, configured to receive a first packet from a sending node based on a target protocol, wherein
the target protocol comprises at least one of the following: a first protocol of a data plane; a second protocol of the data plane, the first protocol is located above a non-access stratum NAS protocol, the second protocol is located above an access network protocol layer, and the first packet comprises at least one of the following: a packet generated based on control information of the data plane; a packet generated based on data of the data plane.

40. A sending node, comprising a processor and a memory, wherein the memory stores a program or instructions capable of running on the processor, and the program or the instructions are executed by the processor to implement the steps of the data transmission method according to any one of claims 1 to 25.

41. A receiving node, comprising a processor and a memory, wherein the memory stores a program or instructions capable of running on the processor, and the program or the instructions are executed by the processor to implement the steps of the data transmission method according to any one of claims 26 to 37.

42. A readable storage medium, wherein the readable storage medium stores a program or instructions, and the program or the instructions are executed by a processor to implement the steps of the data transmission method according to any one of claims 1 to 25 or implement the steps of the data transmission method according to any one of claims 26 to 37.
